# EUROPEAN PATENT APPLICATION

(11) **EP 4 603 873 A1**
(43) Date of publication of application: **20.08.2025**
(21) Application number: 22963023.1
(22) Date of filing: 25.10.2022
(51) Int. Cl.: G01S 13/90, H04B 7/04, H01Q 3/22

(54) **IMAGING METHOD AND SYSTEM BASED ON RADIO FREQUENCY SIGNAL TRANSMISSION, AND COMMUNICATION APPARATUS**

(71) Applicant: Huawei Technologies Co., Ltd., Shenzhen, Guangdong 518129 (CN)
(72) Inventor: ZHOU, Baojian, Shenzhen, Guangdong 518129 (CN); LUO, Jiajin, Shenzhen, Guangdong 518129 (CN); PENG, Xiaohui, Shenzhen, Guangdong 518129 (CN); YANG, Xun, Shenzhen, Guangdong 518129 (CN)
(74) Representative: Maiwald GmbH
(86) International application number: PCT/CN2022/127495
(87) International publication number: WO 2024/087036

(57) **Abstract**

This application provides an imaging method and system based on radio frequency signal transmission, and a communication apparatus. The method includes: receiving first information, where the first information is determined based on information about a strong scatter in a to-be-imaged object, and the information about the strong scatter includes a position of the strong scatter and/or an intensity of the strong scatter; determining a radio frequency signal sending strategy based on the first information, where the radio frequency signal sending strategy includes at least one of the following: reducing a transmit power of a radio frequency signal within a first range, adjusting an antenna beam direction to a first direction, or adjusting an antenna beam in a direction of the strong scatter to a null beam, where a radiation range of an antenna beam within the first range includes the strong scatter, and the first direction is a direction in which the antenna beam does not cover the strong scatter; and sending the radio frequency signal to the to-be-imaged object based on the radio frequency signal sending strategy. The method reduces an energy intensity of a signal radiated on the strong scatter, thereby reducing an intensity of the strong scatter relative to another scatter. In this way, imaging quality of the to-be-imaged object is finally enhanced.

## Description

### TECHNICAL FIELD

This application relates to the field of radio frequency imaging technologies, and more specifically, to an imaging method and system based on radio frequency signal transmission, and a communication apparatus.

### BACKGROUND

During radio frequency imaging, a transmitter sends a radio frequency signal, and the radio frequency signal reaches a receiver under an action of an environment. The radio frequency signal received by the receiver includes action information of the radio frequency signal and the environment. Therefore, the receiver may perform imaging on a to-be-imaged object in the environment based on the received radio frequency signal.

In a radio frequency imaging process, intensities of reflected signals of scatters on the to-be-imaged object are different. If a reflection intensity of a scatter is far greater than an intensity of another scatter, the intensity of the scatter in imaging is greatly increased. As a result, an image point corresponding to a weak scatter in an image is covered by a side lobe generated by the scatter, and a large amplitude of a reflected signal of the scatter causes input saturation of the receiver. This reduces an imaging capability of an imaging system on the weak scatter. The scatter with a particularly strong reflection intensity is also referred to as a strong scatter. That is, existence of the strong scatter affects quality of radio frequency imaging.

Therefore, how to reduce impact of the strong scatter on imaging quality is an urgent problem to be resolved in the radio frequency imaging field.

### SUMMARY

This application provides an imaging method and system based on radio frequency signal transmission, and a communication apparatus. A position of a strong scatter is determined in previous imaging, and then signal energy of the strong scatter is suppressed in subsequent imaging, so that a problem of a coherent speckle and receiver saturation caused by an excessively large intensity of the strong scatter is resolved. This improves radio frequency imaging quality.

According to a first aspect, this application provides an imaging method based on radio frequency signal transmission. The method may be performed by a transmitter. The transmitter may be a terminal device or a network device, or may be a chip used in the terminal device or the network device. The method includes: receiving first information, where the first information is determined based on information about a strong scatter in a to-be-imaged object, and the information about the strong scatter includes position information of the strong scatter and/or intensity information of the strong scatter; determining a radio frequency signal sending strategy based on the first information, where the radio frequency signal sending strategy includes one or more of the following: reducing a transmit power of a radio frequency signal within a first range, adjusting an antenna beam direction to a first direction, or adjusting an antenna beam in a direction of the strong scatter to a null beam, where a radiation range of an antenna beam within the first range includes the strong scatter, and the first direction is a direction in which the antenna beam does not cover the strong scatter; and sending the radio frequency signal to the to-be-imaged object based on the radio frequency signal sending strategy.

According to the method provided in the first aspect, the position information and the intensity information of the strong scatter are first obtained, and then the radio frequency signal sending strategy is determined based on the position information and the intensity information of the strong scatter. The radio frequency signal sending strategy is used to reduce an energy intensity of a signal radiated on the strong scatter. When the energy intensity of the signal radiated on the strong scatter is reduced, an intensity of the strong scatter relative to another scatter is reduced accordingly, and interference of the strong scatter to imaging of the another scatter is finally reduced. In addition, because the signal energy intensity of the strong scatter is reduced, a problem of input saturation of a receiver is resolved, so that an imaging capability of another weak scatter is enhanced. In this way, imaging quality of an entire image is enhanced.

In a possible implementation of the first aspect, the transmit power of the radio frequency signal within the first range is determined based on the intensity information of the strong scatter.

In a possible implementation of the first aspect, a null depth of the null beam is determined based on the intensity information of the strong scatter.

In a possible implementation of the first aspect, the antenna beam direction is adjusted to the first direction in any one of the following manners: a continuous aperture illumination manner or a discontinuous aperture illumination manner.

In a possible implementation of the first aspect, before the receiving first information, the method further includes: sending a previous radio frequency signal. The previous radio frequency signal is used to determine the information about the strong scatter in the to-be-imaged object. In this implementation, the transmitter sends the previous radio frequency signal, so that the receiver can determine the position information or the intensity information of the strong scatter based on the previous radio frequency signal, and the radio frequency signal sending strategy can be formulated based on the position information or the intensity information of the strong scatter.

According to a second aspect, this application provides an imaging method based on radio frequency signal transmission. The method may be performed by a receiver. The receiver may be a terminal device or a network device, or may be a chip used in the terminal device or the network device. The method includes: sending first information, where the first information is determined based on information about a strong scatter in a to-be-imaged object, and the information about the strong scatter includes position information and/or intensity information of the strong scatter; and receiving a radio frequency signal reflected by the to-be-imaged object, and imaging the to-be-imaged object, where the radio frequency signal is sent based on a radio frequency signal sending strategy, the radio frequency signal sending strategy includes one or more of the following: reducing a transmit power of a radio frequency signal within a first range, adjusting an antenna beam direction to a first direction, or adjusting an antenna beam in a direction of the strong scatter to a null beam, where a radiation range of an antenna beam within the first range includes the strong scatter, the first direction is a direction in which the antenna beam does not cover the strong scatter, and the radio frequency signal sending strategy is determined based on the first information.

According to the method provided in the second aspect, the receiver sends the information about the strong scatter in the to-be-imaged object to a transmitter, so that the transmitter can determine the radio frequency signal sending strategy based on the information about the strong scatter in the to-be-imaged object, and then the receiver can perform imaging based on the radio frequency signal reflected by the to-be-imaged object. The radio frequency signal is transmitted based on the radio frequency signal sending strategy. Therefore, an intensity of the strong scatter relative to another scatter is reduced, and interference of the strong scatter to imaging of the another scatter is finally reduced. In addition, because the signal energy intensity of the strong scatter is reduced, a problem of input saturation of the receiver is resolved, so that imaging capability of another weak scatter is enhanced. In this way, imaging quality of an entire image is enhanced.

In a possible implementation of the second aspect, when the first information includes the radio frequency signal sending strategy, before the sending first information, the method further includes: receiving a previous radio frequency signal; determining, based on the previous radio frequency signal, the information about the strong scatter in the to-be-imaged object; and determining the radio frequency signal sending strategy based on the information about the strong scatter. In this implementation, the receiver receives the previous radio frequency signal for imaging, determines a position or an intensity of the strong scatter in the to-be-imaged object, then formulates the radio frequency signal sending strategy based on the position or the intensity of the strong scatter, and sends the radio frequency signal sending strategy to the transmitter. The transmitter may directly send the radio frequency signal without re-formulating the radio frequency signal sending strategy.

In a possible implementation of the second aspect, the transmit power of the radio frequency signal within the first range is determined based on the intensity information of the strong scatter.

In a possible implementation of the second aspect, a null depth of the null beam is determined based on the intensity information of the strong scatter.

In a possible implementation of the second aspect, the antenna beam direction is adjusted to the first direction in any one of the following manners: a continuous aperture illumination manner or a discontinuous aperture illumination manner.

According to a third aspect, this application provides an imaging method based on radio frequency signal transmission. The method is performed by a receiver. The receiver may be a terminal device or a network device, or may be a chip used in the terminal device or the network device. The method includes: receiving second information and echo data, where the second information is determined based on information about a strong scatter in a to-be-imaged object, the information about the strong scatter includes position information and/or intensity information of the strong scatter, and the echo data is determined based on a radio frequency signal reflected by the to-be-imaged object; determining an amplitude suppression strategy of the strong scatter based on the second information and range pulse compression data, where the range pulse compression data is determined based on the echo data, and the amplitude suppression strategy of the strong scatter includes: reducing an amplitude of the strong scatter in the range pulse compression data, and/or reducing an amplitude of a scatter within a preset range including the strong scatter in the range pulse compression data; determining target pulse compression data based on the amplitude suppression strategy of the strong scatter, where the target pulse compression data includes an amplitude that is of the strong scatter in the range pulse compression data and that is obtained through suppression based on the amplitude suppression strategy of the strong scatter; and sending the target pulse compression data.

According to the method provided in the third aspect, the amplitude of the strong scatter in the range pulse compression data is suppressed based on the second information, thereby reducing an intensity of the strong scatter in a final imaging result and side lobe interference caused by the strong scatter. In this way, an entire imaging capability is enhanced. The amplitude of the strong scatter in the range pulse compression data can be reduced to effectively suppress the amplitude of the strong scatter. To ensure suppression effect, the amplitude of the scatter within the preset range including the strong scatter in the range pulse compression data may also be reduced. If the target pulse data after suppression is used for imaging, the amplitude of the strong scatter in the imaging result is not very strong. In this way, imaging quality of an entire image is improved.

In a possible implementation of the third aspect, the method further includes: determining, based on the position information of the strong scatter, a propagation distance of a radio frequency signal reflected by the strong scatter; and determining a range cell of the strong scatter based on the propagation distance of the radio frequency signal and the range pulse compression data; and the determining an amplitude suppression strategy of the strong scatter based on the second information and range pulse compression data includes: determining the amplitude suppression strategy of the strong scatter based on the second information and the range cell of the strong scatter, where the amplitude suppression strategy of the strong scatter includes: reducing an amplitude of the range cell of the strong scatter, and/or reducing an amplitude within a preset range including the range cell of the strong scatter. In this implementation, the range cell of the strong scatter may be determined in the range pulse compression data based on the propagation distance of the radio frequency signal, and then precise suppression is performed by the range cell of the strong scatter.

In a possible implementation of the third aspect, the amplitude of the range cell of the strong scatter is determined based on the intensity information of the strong scatter.

In a possible implementation of the third aspect, the amplitude of the scatter within the preset range including the range cell of the strong scatter is determined based on the intensity information of the strong scatter.

According to a fourth aspect, this application provides an imaging method based on radio frequency signal transmission. The method may be performed by a terminal device or a network device, or may be a chip used in the terminal device or the network device. The method includes: sending second information, where the second information is determined based on information about a strong scatter in a to-be-imaged object, and the information about the strong scatter includes position information and/or intensity information of the strong scatter; receiving at least one piece of target pulse compression data, where the at least one piece of target pulse data is determined based on an amplitude suppression strategy of the strong scatter, the amplitude suppression strategy of the strong scatter includes: reducing an amplitude of the strong scatter in range pulse compression data, and/or reducing an amplitude within a preset range including the strong scatter in the range pulse compression data, and the amplitude suppression strategy of the strong scatter is determined based on the second information; and performing fusion imaging on the at least one piece of target pulse compression data.

According to the imaging method based on radio frequency signal transmission in the fourth aspect, the second information is sent to a third electronic device, so that the third electronic device can obtain the information about the strong scatter or obtain the amplitude suppression strategy of the strong scatter. Then, the target pulse compression data obtained after the amplitude of the strong scatter is suppressed is received, and fusion imaging is performed on a plurality of pieces of target pulse compression data, so that final imaging quality is greatly improved.

In a possible implementation of the fourth aspect, when the second information includes the amplitude suppression strategy of the strong scatter, before the sending second information, the method further includes: receiving a previous radio frequency signal; determining, based on the previous radio frequency signal, the information about the strong scatter in the to-be-imaged object; and determining the amplitude suppression strategy of the strong scatter based on a position of the strong scatter. In this implementation, a receiver receives the previous radio frequency signal for imaging, determines a position or an intensity of the strong scatter in the to-be-imaged object, then formulates the amplitude suppression strategy of the strong scatter based on the position or the intensity of the strong scatter, and sends the amplitude suppression strategy of the strong scatter to the receiver. After that, the receiver may directly process echo data based on the amplitude suppression strategy of the strong scatter, without re-formulating the amplitude suppression strategy of the strong scatter.

In a possible implementation of the fourth aspect, an amplitude of a range cell of the strong scatter is determined based on the intensity information of the strong scatter.

In a possible implementation of the fourth aspect, when the information about the strong scatter includes the intensity information of the strong scatter, reducing an amplitude within a preset range including the range cell of the strong scatter is determined based on the intensity information of the strong scatter.

According to a fifth aspect, an imaging system based on radio frequency signal transmission is provided. The system includes a first electronic device and a second electronic device. The first electronic device is configured to perform the method in any one of the first aspect or the possible implementations of the first aspect, and the second electronic device is configured to perform the method in any one of the second aspect or the possible implementations of the second aspect.

According to a sixth aspect, an imaging system based on radio frequency signal transmission is provided. The system includes a third electronic device and a fourth electronic device. The third electronic device is configured to perform the method in any one of the third aspect or the possible implementations of the third aspect, and the fourth electronic device is configured to perform the method in any one of the fourth aspect or the possible implementations of the fourth aspect.

According to a seventh aspect, a communication apparatus is provided. The communication apparatus includes a unit configured to perform each step in any one of the first aspect or the possible implementations of the first aspect, or a unit configured to perform each step in any one of the second aspect or the possible implementations of the second aspect, or a unit configured to perform each step in any one of the third aspect or the possible implementations of the third aspect, or a unit configured to perform each step in any one of the fourth aspect or the possible implementations of the fourth aspect.

According to an eighth aspect, a communication apparatus is provided. The communication apparatus includes at least one processor and a memory. The processor is coupled to the memory, and the memory stores program instructions. When the program instructions stored in the memory are executed by the processor, the method in any one of the first aspect or the possible implementations of the first aspect, or the method in any one of the second aspect or the possible implementations of the second aspect, or the method in any one of the third aspect or the possible implementations of the third aspect, or the method in any one of the fourth aspect or the possible implementations of the fourth aspect is performed.

According to a ninth aspect, a communication apparatus is provided. The communication apparatus includes at least one processor and an interface circuit. The at least one processor is configured to perform the method in any one of the first aspect or the possible implementations of the first aspect, or the method in any one of the second aspect or the possible implementations of the second aspect, or the method in any one of the third aspect or the possible implementations of the third aspect, or the method in any one of the fourth aspect or the possible implementations of the fourth aspect.

According to a tenth aspect, a terminal device is provided. The terminal device includes the communication apparatus provided in the seventh aspect, or the terminal device includes the communication apparatus provided in the eighth aspect, or the terminal device includes the communication apparatus provided in the ninth aspect.

According to an eleventh aspect, a network device is provided. The network device includes the communication apparatus provided in the seventh aspect, or the network device includes the communication apparatus provided in the eighth aspect, or the network device includes the communication apparatus provided in the ninth aspect.

According to a twelfth aspect, a computer program product is provided. The computer program product includes a computer program. When being executed by a processor, the computer program is configured to perform the method in any one of the first aspect or the possible implementations of the first aspect, or the method in any one of the second aspect or the possible implementations of the second aspect, or the method in any one of the third aspect or the possible implementations of the third aspect, or the method in any one of the fourth aspect or the possible implementations of the fourth aspect.

According to a thirteenth aspect, a computer-readable storage medium is provided. The computer-readable storage medium stores a computer program. When being executed, the computer program is configured to perform the method in any one of the first aspect or the possible implementations of the first aspect, or the method in any one of the second aspect or the possible implementations of the second aspect, or the method in any one of the third aspect or the possible implementations of the third aspect, or the method in any one of the fourth aspect or the possible implementations of the fourth aspect.

According to a fourteenth aspect, a chip is provided. The chip includes a processor, configured to invoke a computer program from a memory and run the computer program, so that a communication device in which the chip is installed performs the method in any one of the first aspect or the possible implementations of the first aspect, or the method in any one of the second aspect or the possible implementations of the second aspect, or the method in any one of the third aspect or the possible implementations of the third aspect, or the method in any one of the fourth aspect or the possible implementations of the fourth aspect.

According to a fifteenth aspect, a communication system is provided. The communication system includes the terminal device and the network device.

### BRIEF DESCRIPTION OF DRAWINGS

FIG. 1 is a diagram of a communication system 100 to which an embodiment of this application is applicable;
FIG. 2 is a diagram of a radio frequency imaging result corresponding to a scenario in FIG. 1;
FIG. 3 is a diagram of a principle of a one-dimensional synthetic aperture array;
FIG. 4 is a diagram of a point spread function of a single scatter in an imaging scenario;
FIG. 5 is a diagram of point spread functions of a plurality of scatters in an imaging scenario;
FIG. 6 is a diagram of an example of a radio frequency imaging scenario;
FIG. 7 is a diagram of impact of a strong scatter shown in FIG. 6 on quality of radio frequency imaging;
FIG. 8 is a diagram of division into sub-apertures in a related technology;
FIG. 9 is a diagram of a basic principle of non-linear scaling in a related technology;
FIG. 10 is a diagram of a system architecture according to an embodiment of this application;
FIG. 11 is a schematic flowchart of an imaging method 1100 based on radio frequency signal transmission according to an embodiment of this application;
FIG. 12 is a diagram in which a first electronic device reduces a power of an output radio frequency signal;
FIG. 13 is a diagram in which an antenna beam direction is adjusted;
FIG. 14 is a diagram in which an antenna beam in a direction of a strong scatter is a null beam;
FIG. 15 is an architectural diagram of another example of an imaging system based on radio frequency signal transmission according to an embodiment of this application;
FIG. 16 is a schematic flowchart of an imaging method 1600 based on radio frequency signal transmission according to an embodiment of this application;
FIG. 17 is a diagram of suppressing an intensity of a strong scatter for a range cell in which the strong scatter is located during two-dimensional imaging;
FIG. 18 is a schematic flowchart of still another example of an imaging method based on radio frequency signal transmission according to an embodiment of this application;
FIG. 19 is a block diagram of a communication apparatus 1900 according to an embodiment of this application;
FIG. 20 is a block diagram of another example of a communication apparatus 2000 according to an embodiment of this application;
FIG. 21 is a diagram of a structure of a terminal device 2100 according to this application;
FIG. 22 is a diagram of a structure of a network device 2200 according to an embodiment of this application; and
FIG. 23 is a diagram of a chip system.

### DESCRIPTION OF EMBODIMENTS

The following clearly and completely describes technical solutions in embodiments of this application with reference to the accompanying drawings in embodiments of this application.

Terms used in the following embodiments are merely intended to describe specific embodiments, but are not intended to limit this application. The terms "one", "a", "the", and "this" of singular forms used in this specification and the appended claims of this application are also intended to include expressions such as "one or more", unless otherwise specified in the context clearly. It should be further understood that, in embodiments of this application, "one or more" means one or more than two (including two); and "and/or" describes an association relationship between associated objects, and represents that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

"A plurality of" in embodiments of this application indicates two or more. It should be noted that, in the descriptions of embodiments of this application, the terms such as "first" and "second" are merely intended for distinction in description, but should not be construed as indicating or implying relative importance or indicating or implying a sequence.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

A terminal device in embodiments of this application may be referred to as user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

A network device in embodiments of this application may be a device configured to communicate with the terminal device. The network device may be a base transceiver station (base transceiver station, BTS) in a global system for mobile communications (global system for mobile communications, GSM) or a code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a scenario of a cloud radio access network (cloud radio access network, CRAN). Alternatively, the network device may be a relay node, an access point, a vehicle-mounted device, a wearable device, a network device in a future 5G network, a network device in a future evolved PLMN network, or the like. This is not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable medium" may include but is not limited to a radio channel, and various other media that can store, contain, and/or carry instructions and/or data.

A radio wave signal is also referred to as a radio frequency signal (Radio frequency signal, RF signal). A transmitter sends a radio frequency signal, and the radio frequency signal reaches a receiver under an action (attenuation, reflection, diffraction, or the like) of an object in an environment. Because a signal received by the receiver is changed by the object in the environment, the radio frequency signal received by the receiver includes action information of the radio frequency signal and the object in the environment. Therefore, the receiver may perform imaging on the object in the environment based on the received radio frequency signal, to reconstruct the object in the environment. This technology of performing imaging on the object in the environment based on the radio frequency signal is referred to as radio frequency imaging. The transmitter and the receiver together constitute a radio frequency imaging system.

It should be understood that the object in the environment may be a static object, for example, a ground, a building, or a tree. Alternatively, the object in the environment may be a dynamic object, for example, a car, a person, or an animal.

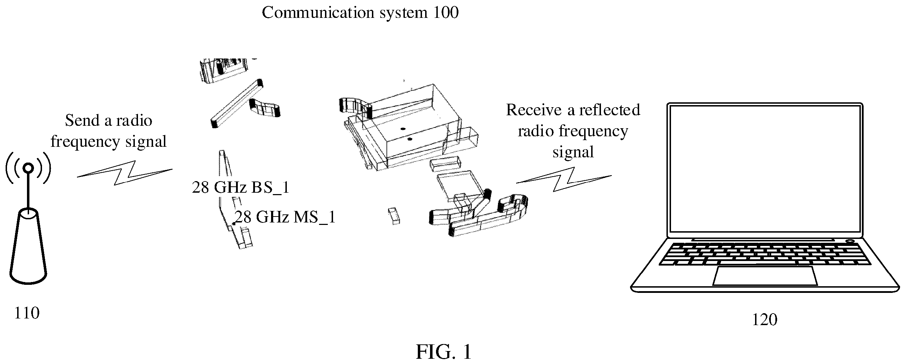

FIG. 1 is a diagram of a communication system 100 to which an embodiment of this application is applicable. As shown in FIG. 1, the communication system 100 includes at least one network device 110 and at least one terminal device 120. In the communication system 100, as shown in FIG. 1, the network device 110 sends a radio frequency signal. When the radio frequency signal passes through a building in a scenario shown in FIG. 1, the radio frequency signal is reflected, and the terminal device 120 receives the reflected radio frequency signal for imaging. In the scenario shown in FIG. 1, for example, the network device 110 is a base station, and the terminal device 120 is a notebook computer. Certainly, the network device or the terminal device may alternatively be another device. This is not limited in this embodiment of this application.

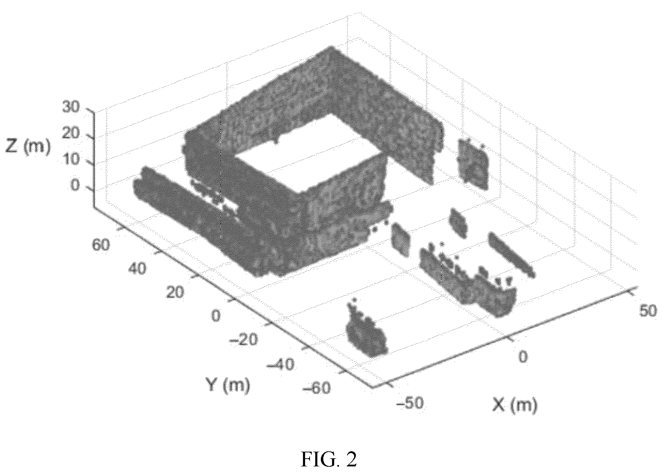

FIG. 2 is a diagram of a radio frequency imaging result corresponding to the scenario in FIG. 1. That is, FIG. 2 is a diagram of an imaging result of the terminal device 120 in FIG. 1. As shown in FIG. 2, an imaged image of the building includes a plurality of image points, and the plurality of image points are obtained by imaging a plurality of scatters in the building in FIG. 1. In other words, a radio frequency imaging system performs radio frequency imaging on the building in FIG. 1 to obtain the radio frequency imaging result that corresponds to the building and that is shown in FIG. 2.

The following specifically describes a basic principle of radio frequency imaging.

The radio frequency imaging system usually needs to rely on a large signal bandwidth and a large antenna array to image an object in an environment. The large signal bandwidth provides a high range resolution, and the large antenna array provides a high angle (azimuth and/or elevation) resolution. If a radio frequency imaging system has any two of the high range resolution, the high azimuth resolution, and the high elevation resolution, two-dimensional imaging may be performed on the object in the environment. If a radio frequency imaging system has the high range resolution, the high azimuth resolution, and the high elevation resolution, high-resolution three-dimensional imaging may be performed on the object in the environment.

The large antenna array in the radio frequency imaging system may be a real aperture array (Real aperture array) or a synthetic aperture array (Synthetic aperture array). The real aperture array includes a plurality of antennas arranged in a spatial position, for example, a one-dimensional linear array or a two-dimensional planar array. A large real aperture array requires large quantities of antennas and radio frequency channels, and therefore costs, power consumption, and complexity are usually high. A typical real aperture array is, for example, a massive MIMO (Massive MIMO) array in a cellular base station, an antenna array of a phased-array radar, or the like.

To resolve the problems of costs, power consumption, and complexity of the large real aperture array, a synthetic aperture array is proposed. The synthetic aperture array is a large virtual array formed by moving an antenna in a spatial position. The antenna transmits and receives signals when moving to a specific position in space. A position of the antenna in the space may be one-dimensional or two-dimensional; and correspondingly, a one-dimensional synthetic aperture array or a two-dimensional synthetic aperture array is formed separately.

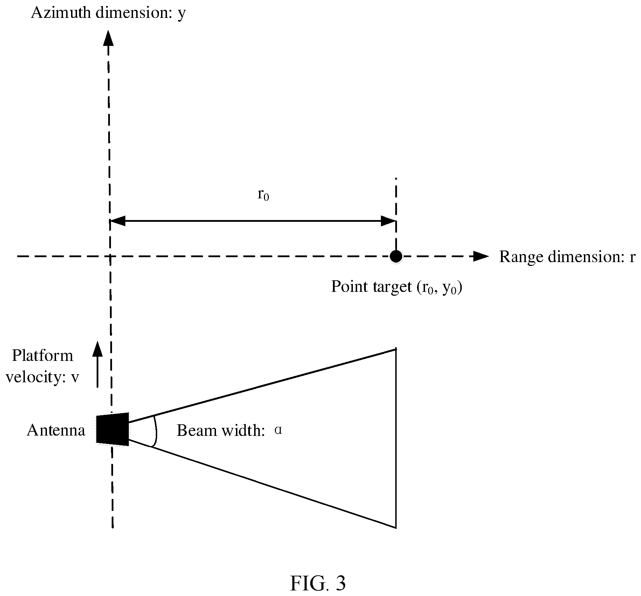

FIG. 3 is a diagram of a principle of the one-dimensional synthetic aperture array. As shown in FIG. 3, an antenna may move in an azimuth dimension (a y axis) at a velocity v and a beam width α on a platform, and may receive and send radio frequency signals when moving to a plurality of different positions, to form a synthetic aperture array arranged upward in the azimuth dimension. This implements imaging on a point target (r₀, y₀).

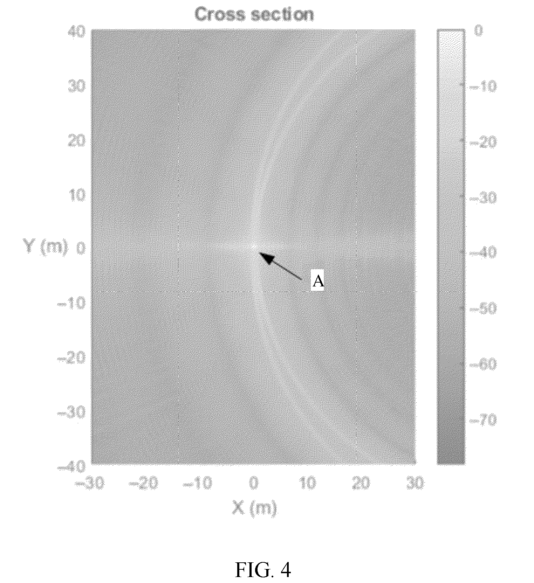

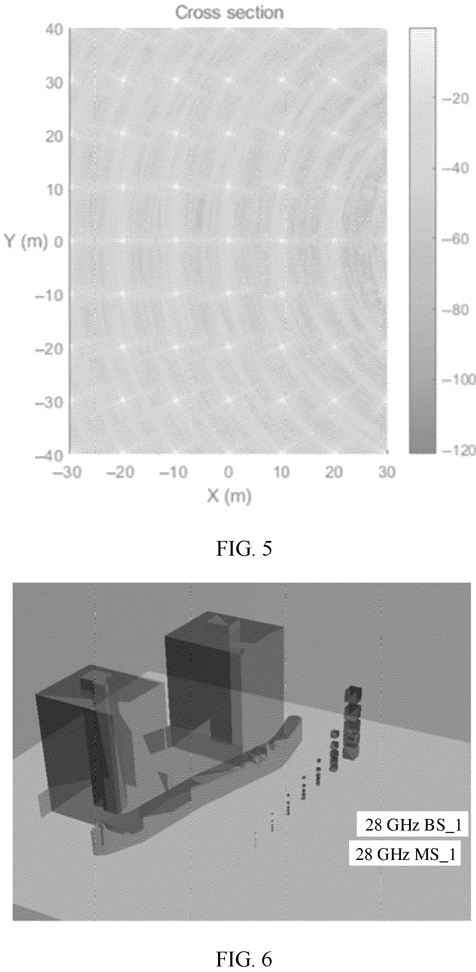

It should be understood that, in a radio frequency imaging process, a scatter in an object does not form an image point in an imaging result, but forms an intensity distribution at a plurality of image points. Such an intensity distribution is referred to as a point spread function (Point spread function, PSF) of the scatter. The point spread function includes a main lobe and a side lobe. FIG. 4 is a diagram of a point spread function of a single scatter in an imaging scenario. As shown in FIG. 4, "A" is an image point at a position of the scatter, and the position corresponds to the main lobe of the point spread function. FIG. 5 is a diagram of point spread functions of a plurality of scatters in an imaging scenario. With reference to FIG. 4 and FIG. 5, it can be learned that a side lobe of a point spread function has one high side lobe region in each of a range dimension and an azimuth dimension, and these high side lobe regions may interfere with other image points.

It should be understood that an intensity of each image point in a radio frequency imaging result is determined by an intensity of a reflected signal of a scatter in an object (such as a building) corresponding to the image point and coherence of the reflected signal at a plurality of transmit and receive antenna positions.

Due to impact of a geometric structure including a transmitter, the scatter, and a receiver, and a scattering characteristic (a material, roughness, and the like) of the scatter, intensities of reflected signals of different scatters are different, and may greatly differ. For example, an intensity of a reflected signal when a scatter A on the building is metal is greatly different from an intensity of a reflected signal when a scatter B on the building is non-metal. For another example, intensities of reflected signals of different metal materials are also different. Therefore, in radio frequency imaging, reflection intensities of some scatters are often far greater than reflection intensities of other scatters.

In addition, if a reflected signal of a scatter is coherent at a plurality of transmit and receive antenna positions, coherent accumulation occurs on the reflected signals during imaging. This greatly increases an intensity of the scatter in an image. For example, for the scatter A, an antenna 1 transmits a signal S1, an antenna 2 transmits a signal S2, and phases of the signal S1 and the signal S2 are consistent. In this case, after the scatter A is imaged, an intensity of the scatter A in the image is a sum of an intensity of the signal S1 and an intensity of the signal S2. In other words, finally, the intensity of the scatter A in the image is greatly increased. For another example, for a scatter C, the antenna 1 transmits the signal S1, the antenna 2 transmits the signal S2, an antenna 3 transmits a signal S3, and phases of the signal S1, the signal S2, and the signal S3 are consistent. In this case, after the scatter C is imaged, an intensity of the scatter C in the image is a sum of intensities of the signal S1, the signal S2, and the signal S3. In other words, finally, the intensity of the scatter C in the image is greatly increased.

A scatter with a particularly strong intensity caused by at least one of the foregoing two factors is also referred to as a strong scatter. For example, the scatter A may be understood as a strong scatter, and the scatter C may also be understood as a strong scatter.

Existence of the strong scatter may lead to the following two problems:
One is that the existence of the strong scatter may cause a decrease in quality of radio frequency imaging. Because an intensity of a point spread function corresponding to a strong scatter in an imaging result is very large, an intensity of a side lobe of the point spread function of the strong scatter is greater than that of a main lobe of a point spread function of a weak scatter in a side lobe region. As a result, an image point existing in a side lobe region of the strong scatter is covered. That is, the point that should be presented on the imaged image cannot be presented because the point is blocked, and consequently quality of radio frequency imaging is reduced. Therefore, quality of radio frequency imaging is reduced due to the existence of the strong scatter.

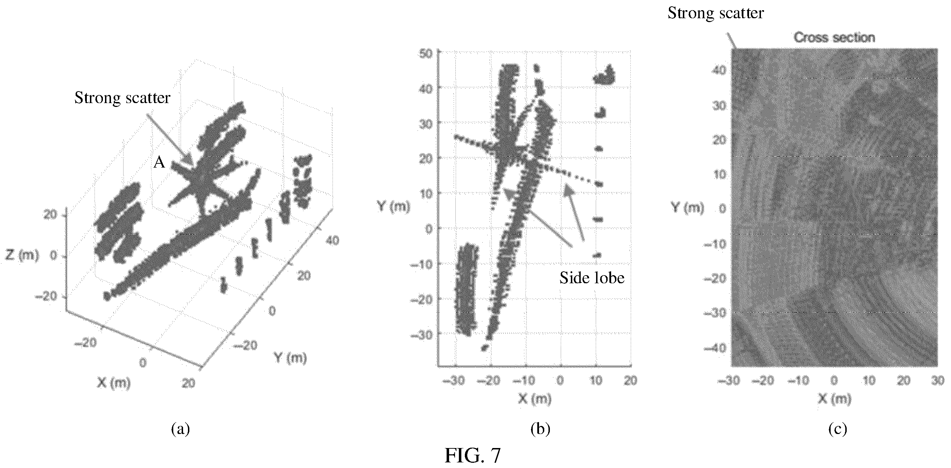

The existence of the strong scatter may form a large-region bright spot, which is also referred to as a coherent speckle. The coherent speckle is a problem commonly seen in radio frequency imaging. FIG. 6 is a diagram of an example of a radio frequency imaging scenario. There is a strong scatter in the scenario shown in FIG. 6. FIG. 7 is a diagram of impact of the strong scatter shown in FIG. 6 on quality of radio frequency imaging. As shown in (a) in FIG. 7, it can be learned that there is a strong scatter at a position A. As shown in (b) in FIG. 7, it can be learned that a side lobe (side lobe) of the strong scatter may cover another scatter. (c) in FIG. 7 shows a point spread function of the strong scatter. It can be learned from (c) in FIG. 7 that the point spread function of the strong scatter includes a large-area side lobe. That is, the coherent speckle generated due to the existence of the strong scatter also reduces quality of radio frequency imaging.

Secondly, a large amplitude of a reflected signal of the strong scatter may also cause input saturation of the receiver, thereby reducing an imaging capability of the radio frequency imaging system for the weak scatter. In other words, because an intensity of the reflected signal of the strong scatter is too large and occupies almost an entire dynamic range of the receiver, the weak scatter can only be displayed weakly in final imaging, and even cannot be displayed in the final imaging. In addition, when image points in radio frequency imaging are filtered out by using a threshold method, the existence of the strong scatter may cause a target image point to be deleted, but the side lobe of the strong scatter is retained.

In conclusion, the existence of the strong scatter in radio frequency imaging greatly reduces quality of radio frequency imaging. Therefore, how to alleviate low quality of radio frequency imaging due to the strong scatter to improve quality of radio frequency imaging is a problem that needs urgent attention at present.

The following specifically describes how to mitigate impact of the strong scatter and improve quality of radio frequency imaging in a related technology.

It should be first noted that imaging data received by the receiver is also referred to as echo data. The echo data used for imaging is usually of a multi-dimensional matrix (Matrix) or tensor (Tensor) structure. For example, for a three-dimensional imaging system, echo data of the three-dimensional imaging system may be a three-dimensional tensor, and three dimensions of the three-dimensional imaging system respectively correspond to a range sampling dimension, a transmit antenna dimension, and a receive antenna dimension.

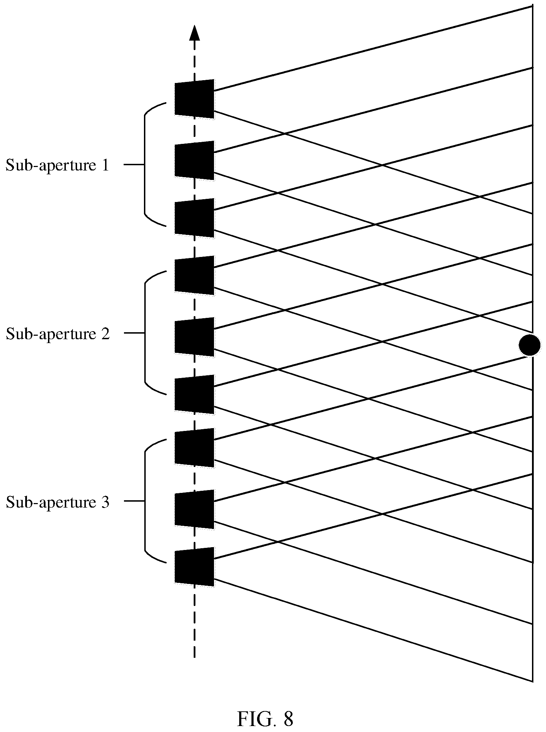

The strong scatter may be caused by coherence of reflected signals of the scatters at a plurality of transmit and receive antenna positions. Therefore, in a related technology, to alleviate a coherence speckle caused by the strong scatter, before the echo data is received, the echo data may be classified into a plurality of pieces of sub-aperture echo data in an antenna dimension (a transmit antenna dimension or a receive antenna dimension); after the plurality pieces of sub-aperture echo data are received, imaging is performed respectively based on the plurality pieces of sub-aperture echo data to obtain a plurality of sub-images; and finally, the plurality of sub-images are superimposed to obtain a final imaging result. FIG. 8 is a diagram of division into sub-apertures. As shown in FIG. 8, nine antennas are divided into three groups to form three sub-apertures, and imaging is separately performed using the three sub-apertures to obtain three sub-images. Then, the three sub-images are superimposed to obtain a final imaging result. Quality of the final imaging result generated by using the three sub-images is better than quality of imaging directly performed by using the nine antennas.

The following specifically describes a principle of division into the sub-apertures. Assuming that an amplitude of a reflected signal of a scatter is 1, energy is 1, and the reflected signal is coherent at K antenna positions, a signal amplitude after coherent accumulation is K, and signal energy after coherent accumulation is K². It is assumed that a reflected signal of the strong scatter is coherent at N antenna positions, and signal energy after coherent accumulation is N². A reflected signal of another scatter is coherent at M antenna positions, signal energy after coherent accumulation is M², and M is far less than N. Then, according to the foregoing method of division into the sub-apertures, the N antenna positions are divided into N/M groups, and each group includes the M antenna positions, that is, a size of the sub-aperture is M. In this case, a size of each sub-aperture is the same as a quantity of coherent antenna positions of the another scatter, which is M. In a sub-image generated by each sub-aperture, energy of the strong scatter is M², which is the same as energy of the another scatter. When sub-images are superimposed, energy of image points in an image is directly superimposed, instead of superimposition of coherence of reflected signals. Therefore, in a final image obtained through superposition, both the energy of the strong scatter and the energy of the another scatter are M²×N/M=MN. This avoids a problem that the energy of the strong scatter is far greater than the energy of the another scatter.

An example is provided for description with reference to FIG. 8. As shown in FIG. 8, nine antennas whose reflected signals of the strong scatter are coherent are divided into 9/3=3 groups, and each group includes three antenna positions, that is, a size of a sub-aperture is 3. In a sub-image generated by each sub-aperture, energy of the strong scatter is 3². Because the another scatter is also coherent at the three antenna positions, the energy of the strong scatter is the same as the energy of the another scatter. When sub-images are superimposed, energy of image points in an image is directly superimposed, namely, 3×3², instead of 9². Therefore, in the final image obtained through superposition, both the energy of the strong scatter and the energy of the another scatter are 3×3². This avoids a problem that the energy of the strong scatter is far greater than the energy of the another scatter.

However, the method of performing imaging by using the sub-aperture makes the sub-aperture smaller than an original aperture, and the sub-image generated by the sub-aperture has a smaller resolution than an image generated by the original aperture, which may consequently lead to a loss in a resolution of an image obtained after imaging is performed. In addition, the sub-aperture-based imaging method does not resolve a problem of input saturation of the receiver due to the strong scatter, and has a high requirement for a dynamic range of a receiver device.

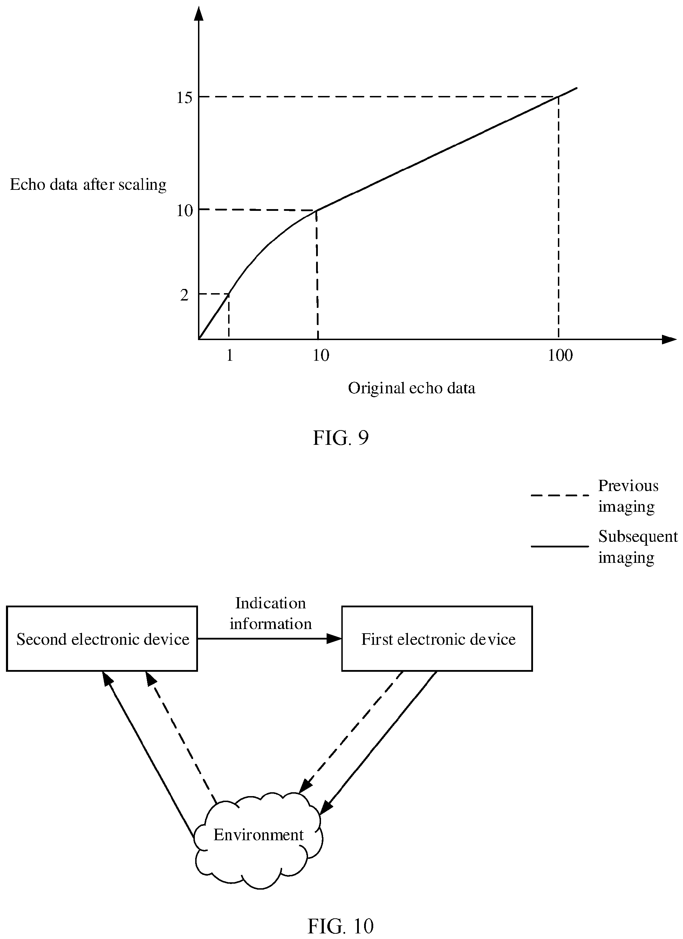

In another related technology, after a receiver receives echo data, the receiver performs non-linear scaling on the echo data; and at the same time when data with a small amplitude is retained, data with a large amplitude is scaled down. This mitigates impact of the strong scatter. FIG. 9 is a diagram of a basic principle of non-linear scaling. As shown in FIG. 9, original echo data includes 1, 10, ..., and 100. After non-linear scaling is performed on the original echo data, an amplitude of 1 is increased to 2, an amplitude of 10 remains unchanged, and an amplitude of 100 is reduced to 15. When the receiver uses echo data after scaling to perform imaging, a reflection intensity of the strong scatter is reduced. This mitigates the impact of the strong scatter on imaging.

However, non-linear scaling performed on the echo data may result in image luminance distortion. Because amplitude adjustment is indiscriminately performed on all bright points in the image in this manner, a contrast and a dynamic range of the image may be reduced. In addition, non-linear scaling does not resolve the problem of input saturation of the receiver due to the strong scatter, and has a high requirement for a dynamic range of a receiver device.

In still another related technology, after a receiver receives echo data to generate an image, a point spread function of a strong scatter in the image is reconstructed, and side lobes brought by the strong scatter are subtracted from the image, to reduce interference of the side lobes of the strong scatter to a surrounding region. A main disadvantage of this interference cancellation method is high calculation complexity. In addition, precise reconstruction of the point spread function requires a high-precision and high-dynamic-range receiver, and therefore hardware costs are high. In addition, the interference cancellation method does not resolve the problem of input saturation of the receiver due to the strong scatter, and has a high requirement for a dynamic range of a receiver device.

In view of this, this application provides an imaging method based on radio frequency signal transmission. In the method, a radio frequency signal sending strategy is determined based on an obtained position and intensity of a strong scatter. The radio frequency signal sending strategy includes one or more of the following: reducing a power of a radio frequency signal within a first range, adjusting an antenna beam to a first direction, or adjusting an antenna beam in a direction of the strong scatter to a null beam. A radiation range of an antenna beam within the first range includes the strong scatter, and the first direction is a direction in which the antenna beam does not cover the strong scatter. The radio frequency signal sending strategy may reduce a signal energy intensity of the strong scatter, thereby reducing interference of the strong scatter to another scatter. In addition, because the signal energy intensity of the strong scatter is reduced, a problem of input saturation of a receiver is resolved, so that an imaging capability of another weak scatter is enhanced. In this way, imaging quality of an entire image is enhanced.

Before the imaging method based on radio frequency signal transmission in this application is described below, a system architecture and an application scenario to which the method is applicable are first described. FIG. 10 is a diagram of an architecture of an imaging system based on radio frequency signal transmission according to an embodiment of this application.

As shown in FIG. 10, the system includes a first electronic device and a second electronic device. First, the first electronic device and the second electronic device are configured to perform previous imaging to determine a position of a strong scatter.

It should be noted that the first electronic device may be a transmitter or a receiver. When the first electronic device is a transmitter, the transmitter may be a network device or a terminal device. When the first electronic device is a receiver, the receiver may be a network device or a terminal device.

The second electronic device may be a transmitter or a receiver. When the second electronic device is a transmitter, the transmitter may be a network device or a terminal device. When the second electronic device is a receiver, the receiver may be a network device or a terminal device.

In a possible implementation, the first electronic device is a transmitter, and is configured to send a radio frequency signal. After the radio frequency signal acts on a to-be-imaged object in an environment, the second electronic device serves as a receiver, and is configured to: receive a reflected radio frequency signal and perform imaging based on the reflected radio frequency signal.

In another possible implementation, the second electronic device is a transmitter, and is configured to send a radio frequency signal. After the radio frequency signal acts on a to-be-imaged object in an environment, the first electronic device serves as a receiver, and is configured to: receive a reflected radio frequency signal and perform imaging based on the reflected radio frequency signal.

It can be learned that the first electronic device may send the radio frequency signal or may receive the radio frequency signal, and determine the position of the strong scatter after performing previous imaging. The second electronic device may send the radio frequency signal or may receive the radio frequency signal, and determine the position of the strong scatter after performing previous imaging. A device for determining the position of the strong scatter is not limited in this embodiment of this application.

When the first electronic device is configured to send a previous radio frequency signal, and the second electronic device is configured to: perform previous imaging and determine the position of the strong scatter, the second electronic device sends first information to the first electronic device based on the position of the strong scatter after imaging, the first electronic device sends the radio frequency signal again to the second electronic device based on the first information, and the second electronic device receives a reflected radio frequency signal and performs subsequent imaging.

It should be understood that the first electronic device includes one or more antennas. The antenna may be a real-aperture antenna, or may be a synthetic-aperture antenna. The antenna of the first electronic device is configured to send a radio frequency signal generated by the first electronic device to a to-be-imaged object.

It should be further understood that the second electronic device includes one or more antennas. The antenna may be a real-aperture antenna, or may be a synthetic-aperture antenna. The antenna of the second electronic device is configured to: receive a signal obtained after the radio frequency signal undergoes an action (attenuation, reflection, diffraction, or the like) of the to-be-imaged object, and perform imaging.

In some embodiments, the first information sent by the second electronic device may include position information of the strong scatter, and may further include intensity information of the strong scatter. When the first information received by the first electronic device is the position information of the strong scatter, or when the first information received by the first electronic device is the position information and the intensity information of the strong scatter, the first electronic device may determine a radio frequency signal sending strategy based on the first information, and then send the radio frequency signal.

In some other embodiments, the first information sent by the second electronic device may be information about the radio frequency signal sending strategy determined based on the position information or the intensity information of the strong scatter.

Optionally, the radio frequency signal sending strategy may include at least one of the following: reducing a power of a radio frequency signal within a first range, adjusting an antenna beam to a first direction, or adjusting an antenna beam in a direction of the strong scatter to a null beam. A radiation range of an antenna beam within the first range includes the strong scatter, and the first direction is a direction in which the antenna beam does not cover the strong scatter.

Therefore, in the system provided in this application, when the first electronic device determines the radio frequency signal sending strategy based on the first information sent by the second electronic device, and then sends the radio frequency signal based on the radio frequency signal strategy, signal energy of the strong scatter can be effectively reduced, thereby reducing interference of the strong scatter to another scatter. In addition, because a signal energy intensity of the strong scatter is reduced, a problem of input saturation of the second electronic device is resolved, so that an imaging capability of another weak scatter is enhanced. In this way, imaging quality of an entire image is enhanced.

The following describes in detail an imaging method based on radio frequency signal transmission according to an embodiment of this application with reference to the accompanying drawings.

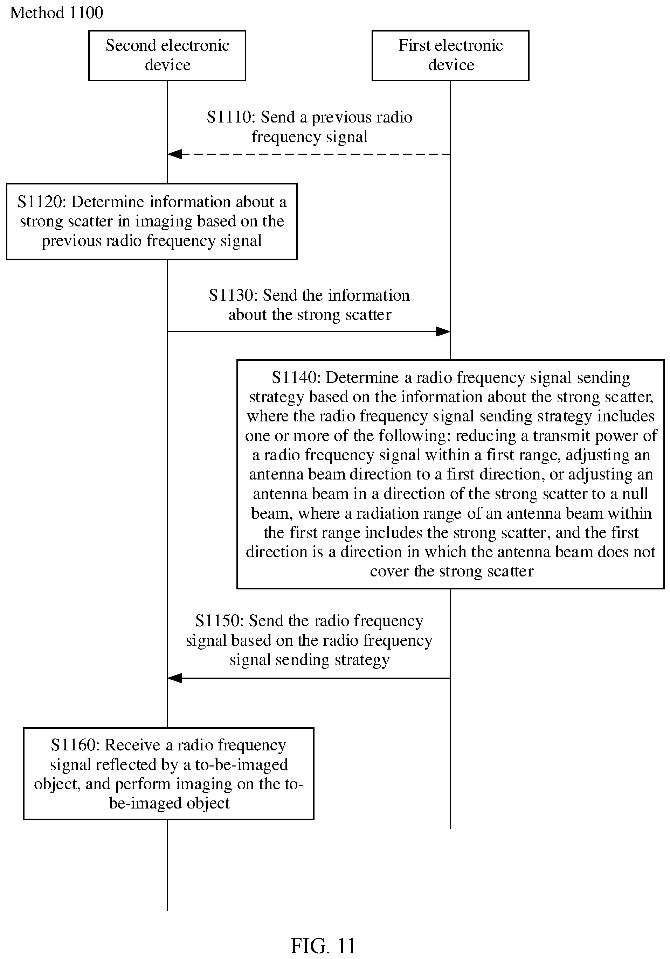

FIG. 11 is a schematic flowchart of an imaging method 1100 based on radio frequency signal transmission according to an embodiment of this application from a perspective of device interaction. As shown in FIG. 11, the method 1100 may include step S1110 to step S1160. The following describes in detail the steps in the method 1100 with reference to FIG. 11.

It should be understood that, in this embodiment of this application, the method 1100 is described by using an example in which the method 1100 is performed by a first electronic device and a second electronic device. By way of an example but not a limitation, the method 1100 may alternatively be performed by a chip used in the first electronic device and a chip used in the second electronic device.

S1110: The first electronic device sends a previous radio frequency signal to the second electronic device.

S1120: The second electronic device determines information about a strong scatter in imaging based on the previous radio frequency signal.

After receiving the previous radio frequency signal, the second electronic device converts the previous radio frequency signal into echo data, and then performs imaging based on the received echo data. In this case, there is one or more strong scatters in an imaging result. When the information about the strong scatter includes position information and intensity information of the strong scatter, the position information and the intensity information of the strong scatter may be directly obtained from the imaging result.

S1130: The second electronic device sends the information about the strong scatter to the first electronic device.

In this embodiment of this application, to determine a position and an intensity of the strong scatter, the first electronic device and the second electronic device may be first used to perform previous imaging, to determine the position and the intensity of the strong scatter in a previous imaging result.

It should be understood that an intensity of a reflected signal of a scatter in a to-be-imaged object is related to a geometric structure including a radio frequency signal sending device, the scatter, and a radio frequency signal receiving device. Therefore, in previous imaging, the first electronic device, the second electronic device, and the strong scatter in the to-be-imaged object may be used to determine the information about the strong scatter, for example, the position information and the intensity information of the strong scatter.

For example, as described in step S1110 and step S1120, the first electronic device sends the radio frequency signal, and the second electronic device determines the information about the strong scatter after receiving a reflected radio frequency signal and performing previous imaging.

After determining the information about the strong scatter based on the previous imaging result, the second electronic device sends the information about the strong scatter to the first electronic device.

It should be noted that there may be one or more strong scatters. This is not limited in this embodiment of this application.

In a possible implementation, the second electronic device may send the position information of the strong scatter to the first electronic device in a form of coordinates.

It should be noted that the position information of the strong scatter is position information of the strong scatter in space, and the coordinates may be any one of Cartesian coordinates (rectangular coordinates), polar coordinates, spherical coordinates, or column coordinates.

For example, a format of the position information of the strong scatter may be two-dimensional coordinates {(aᵢ, bᵢ)} or three-dimensional coordinates {(aᵢ, bᵢ, cᵢ)} of the strong scatter, where i=1, 2, ..., or N.

For another example, a format of the position information of the strong scatter may alternatively be two-dimensional coordinates {(Δaᵢ, Δbᵢ)} or three-dimensional coordinates {(Δaᵢ, Δbᵢ, Δcᵢ)} of the strong scatter relative to the first electronic device, where i=1, 2, ..., or N.

In some other embodiments, the second electronic device may further send position information and intensity information of one or more strong scatters to the first electronic device.

It should be understood that the intensity of the strong scatter may be understood as a ratio of an amplitude of the strong scatter to an average amplitude of other scatters. The first electronic device may adjust a signal energy intensity of the strong scatter based on the intensity of the strong scatter.

S1140: The first electronic device determines a radio frequency signal sending strategy based on the information about the strong scatter, where the radio frequency signal sending strategy includes one or more of the following: reducing a transmit power of a radio frequency signal within a first range, adjusting an antenna beam direction to a first direction, or adjusting an antenna beam in a direction of the strong scatter to a null beam, where a radiation range of an antenna beam within the first range includes the strong scatter, and the first direction is a direction in which the antenna beam does not cover the strong scatter.

It should be understood that, the power of the radio frequency signal output by the first electronic device is radiated by an antenna in a form of a radio frequency signal. After the radio frequency signal reaches the second electronic device, an antenna of the second electronic device receives a power of a reflected radio frequency signal, and sends the power of the reflected radio frequency signal to the second electronic device through a cable. The second electronic device performs imaging based on the received power of the radio frequency signal.

It should be further understood that, when there is a strong scatter in scatters in the to-be-imaged object, because a signal radiation intensity of the strong scatter is excessively large, saturation occurs when the second electronic device receives the radio frequency signal sent by the first electronic device, and consequently a signal of another scatter in the to-be-imaged object cannot be received. In addition, a side lobe of the strong scatter may block imaging of the another scatter in an image.

Therefore, in some embodiments of this application, to reduce impact caused by the strong scatter, when a radiation range of an antenna beam of an antenna of the first electronic device within the first range includes the strong scatter, the transmit power of the radio frequency signal within the first range is reduced. After the power of the radio frequency signal transmitted by the first electronic device within the first range is reduced, energy of a signal irradiated on the strong scatter is reduced, thereby reducing an intensity of the strong scatter relative to the another scatter.

In a possible implementation, when the information that is about the strong scatter and that is received by the first electronic device is the position information of the strong scatter, the first electronic device may determine a value of the power of the output radio frequency signal according to a specific situation.

In another possible implementation, when the information that is about the strong scatter and that is received by the first electronic device is the position information and the intensity information of the strong scatter, the first electronic device may determine a value of the transmit power of the radio frequency signal within the first range based on the received intensity information of the strong scatter.

For example, the intensity of the strong scatter is a ratio ΔI, for example, 30 dB, of the amplitude of the strong scatter to the average amplitude of the other scatters. Therefore, when the intensity that is of the strong scatter and that is received by the first electronic device is 50 dB, it indicates that an intensity of another scatter is 20 dB. In this case, the power of the radio frequency signal output by the first electronic device may be reduced to a power of a corresponding radio frequency signal about 20 dB.

The following uses a synthetic aperture array as an example to describe a manner in which the first electronic device reduces the transmit power of the radio frequency signal within the first range.

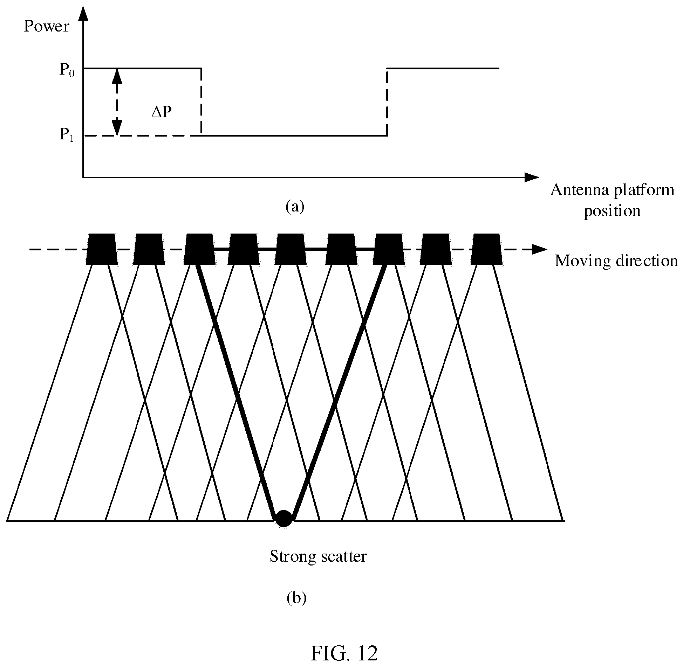

For example, FIG. 12 is a diagram in which the first electronic device reduces the power of the output radio frequency signal. With reference to (a) in FIG. 12 and (b) in FIG. 12, when the radiation range of the antenna beam does not include the strong scatter, the power of the radio frequency signal output by the first electronic device is P₀; or when the radiation range of the antenna beam includes the strong scatter, the power of the radio frequency signal output by the first electronic device is reduced to P₁. When the power of the radio frequency signal output by the first electronic device remains P₀, due to a characteristic of the strong scatter and coherence of a plurality of antennas, signal energy of the strong scatter is far greater than an intensity of the another scatter. Therefore, when the antenna moves to the radiation range of the antenna beam including the strong scatter, the first electronic device reduces the power of the output radio frequency signal to P₁, and the antenna sends the radio frequency signal based on P₁. When the antenna moves to the antenna beam not covering the strong scatter, the first electronic device restores the power of the output radio frequency signal to P₀. In this implementation, energy of a signal irradiated on the strong scatter can be reduced, thereby reducing an intensity of the strong scatter relative to the another scatter.

In some other embodiments of this application, the antenna beam direction may be further adjusted to the first direction, so that signal energy of the strong scatter can be reduced. The first direction is the direction in which the antenna beam does not cover the strong scatter. This is because, when the antenna beam is not directly radiated on the strong scatter, the energy of the signal radiated on the strong scatter can be reduced, thereby reducing the intensity of the strong scatter relative to the another scatter.

It should be understood that the beam is a communication resource. The beam may be a wide beam, a narrow beam, or another type of beam. A technology for forming the beam may be a beamforming (beamforming) technology or another technical means. The beamforming technology may be specifically a digital beamforming technology, an analog beamforming technology, or a hybrid digital/analog beamforming technology. Different beams may be considered as different resources. Same information or different information may be sent by using different beams. Optionally, a plurality of beams having a same or similar communication feature may be considered as one beam. One beam may include one or more antenna ports, configured to transmit a data channel, a control channel, a detection signal, and the like.

The beam may alternatively be understood as a spatial resource, and may be a transmit or receive precoding vector having energy transmission directivity. The energy transmission directivity may indicate that a signal, received in a spatial position, on which precoding processing is performed by using the precoding vector has a good receive power, for example, meets a received demodulation signal to noise ratio. The energy transmission directivity may also indicate that same signals sent from different spatial positions and received by using the precoding vector have different receive powers. A same device (for example, a network device or a terminal device) may have different precoding vectors, and different devices may also have different precoding vectors. To be specific, the different precoding vectors correspond to different beams. For a configuration or a capability of a device, one device may use one or more of a plurality of different precoding vectors at a same moment. In other words, one or more beams may be formed at the same time. From perspectives of transmitting and receiving, beams can be classified into transmit beams and receive beams.

The following uses a synthetic aperture array as an example to describe a manner in which the first electronic device adjusts the beam direction to the first direction.

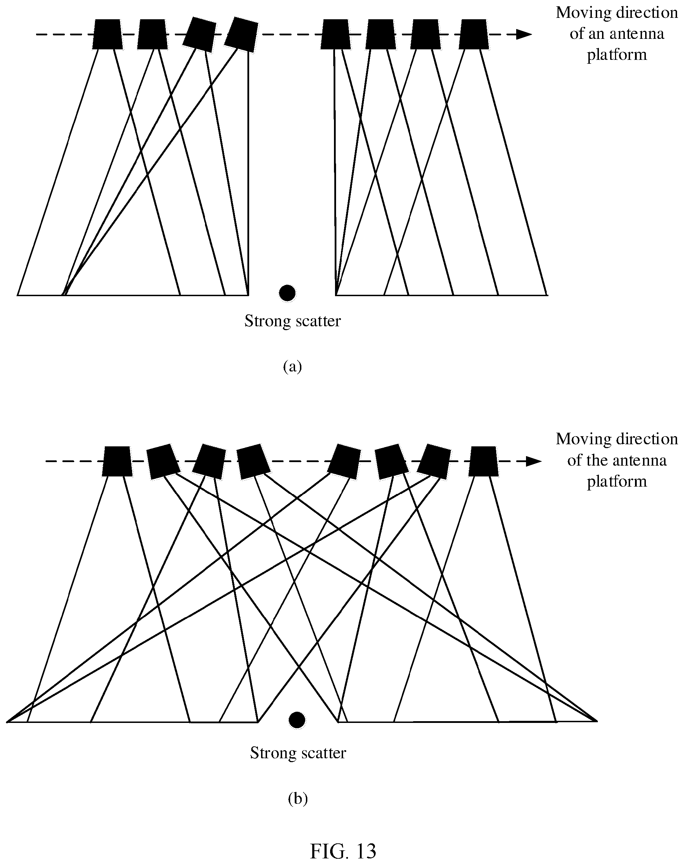

For example, FIG. 13 is a diagram in which the antenna beam direction is adjusted. (a) in FIG. 13 is a diagram in which the antenna beam direction is adjusted during continuous aperture illumination. It can be learned from (a) in FIG. 13 that, when the antenna radiates, a direction of a main lobe of the antenna beam is adjusted, so that the direction of the main lobe of the antenna beam deviates from the strong scatter. This reduces energy of a signal irradiated on the strong scatter, and reduces an intensity of the strong scatter relative to another scatter.

It should be understood that the antenna moves to form an aperture. On a left side of a strong scatter A, four continuously moving antennas form an aperture. Finally, the left side of the strong scatter A is imaged. On a right side of the strong scatter A, four continuously moving antennas form an aperture. Finally, the right side of the strong scatter A is imaged. Both the left side of the strong scatter A and the right side of the strong scatter A are apertures formed by the continuously moving antennas. Therefore, this is also referred to as continuous aperture illumination.

(b) in FIG. 13 is a diagram of discontinuous aperture illumination. When the antenna radiates, a direction of a main lobe of the antenna beam is adjusted, so that a direction of the main lobe of the antenna beam deviates from the strong scatter. This reduces energy of a signal irradiated on the strong scatter, and reduces an intensity of the strong scatter relative to another scatter.

It should be understood that an image on a left side of a strong scatter B is formed after an aperture is formed by discontinuous antennas on the left side of the strong scatter B, and an image on a right side of the strong scatter B is formed after an aperture is formed by discontinuous antennas on the right side of the strong scatter B. Therefore, this is also referred to as discontinuous aperture illumination.

In still some other embodiments of this application, the first electronic device may adjust the antenna beam in the direction of the strong scatter to the null beam. The null beam may be represented by a null depth. When there is a specific null depth in the direction of the strong scatter, a beam gain in the direction of the strong scatter is reduced, and an energy intensity of a signal finally received at the strong scatter is greatly reduced. In this implementation, energy of a signal irradiated on the strong scatter can be reduced, thereby reducing an intensity of the strong scatter relative to another scatter.

It should be noted that the null depth may be randomly specified. This is not limited in this embodiment of this application.

In a possible implementation, when the information that is about the strong scatter and that is received by the first electronic device is the position information of the strong scatter, the first electronic device may determine the null depth of the null beam according to a specific situation.

In another possible implementation, when the information that is about the strong scatter and that is received by the first electronic device is the position information and the intensity information of the strong scatter, the first electronic device may determine a null depth of a null beam of the antenna beam in the direction of the strong scatter based on the received intensity information of the strong scatter.

The following uses a synthetic aperture array as an example to describe a manner in which the antenna beam in the direction of the strong scatter is adjusted to the null beam.

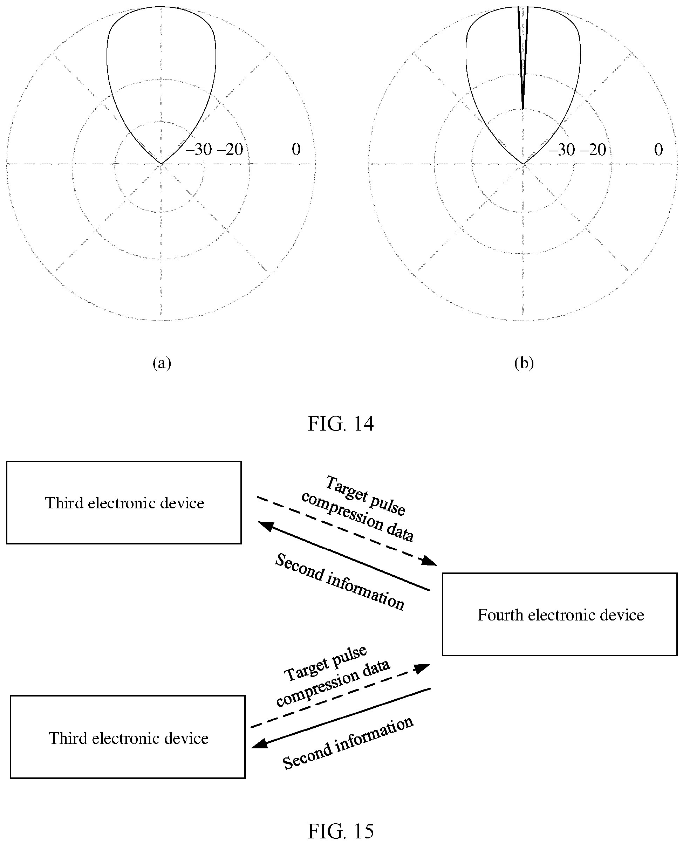

FIG. 14 is a diagram in which the antenna beam in the direction of the strong scatter is the null beam. (a) in FIG. 14 shows a common non-null beam. A distance between concentric circles represents a difference in relative signal intensities in decibels (dB). It can be learned from the figure that concentric circle boundary lines of 0 dB, -20 dB, and -30 dB represent attenuation relative to a peak value of a main lobe. When an antenna uses the common non-null beam to send a signal, each scatter has a same beam gain when being covered by the main lobe. Therefore, an intensity of a reflected signal of each scatter depends only on a characteristic of the scatter. Therefore, a signal intensity of the strong scatter is far greater than an intensity of another scatter.

(b) in FIG. 14 shows a null beam. It can be learned from the figure that, in the beam pattern, there is a null in the direction of the strong scatter. For example, if a signal energy intensity of the strong scatter is attenuated by 30 dB, energy of a signal irradiated on the strong scatter can be reduced, thereby reducing an intensity of the strong scatter relative to another scatter. Certainly, the signal energy intensity of the strong scatter may be attenuated by any value. This is not limited in this embodiment of this application. In addition, the strong scatter may be at any position. This is not limited in this embodiment of this application.

S1150: The first electronic device sends the radio frequency signal based on the radio frequency signal sending strategy.

In this embodiment of this application, to reduce impact of the strong scatter on imaging quality, the first electronic device sends the radio frequency signal based on the determined radio frequency signal sending strategy, thereby reducing reduce a signal energy intensity of the strong scatter relative to a signal energy intensity of another scatter. In addition, because the signal energy intensity of the strong scatter is reduced, a problem of input saturation of the second electronic device is resolved.

It should be noted that the radio frequency signal sending strategy may be determined by the first electronic device based on a received position or intensity of the strong scatter, or may be determined by the second electronic device based on a determined position or intensity of the strong scatter. Then, the radio frequency signal sending strategy is sent to the first electronic device. Certainly, the radio frequency signal sending strategy may alternatively be determined by another device. A source of the radio frequency signal sending strategy is not limited in this application.

A specific manner in which the second electronic device determines the radio frequency signal sending strategy based on a determined position or intensity of the strong scatter is consistent with a specific manner in which the first electronic device determines the radio frequency signal sending strategy based on the determined position or intensity of the strong scatter. For details, refer to the description of S1140. Details are not described herein again.

Optionally, when the radio frequency signal sending strategy is determined by the second electronic device based on the position of the strong scatter, and then the second electronic device sends the radio frequency signal sending strategy to the first electronic device, the radio frequency signal sending strategy may be indicated by using one bit. In other words, when a bit value sent by the second electronic device to the first electronic device is 1, it indicates that the first electronic device needs to execute the radio frequency signal sending strategy to send the radio frequency signal; or when a bit value sent by the second electronic device to the first electronic device is not 1, it indicates that the first electronic device does not need to execute the radio frequency signal sending strategy to send the radio frequency signal.

Certainly, the radio frequency signal sending strategy may alternatively be indicated in another form. This is not limited in this embodiment of this application.

Certainly, when the radio frequency signal sending strategy is determined by the second electronic device based on the position information and the intensity information of the strong scatter, the indication information further includes an attenuation value of the transmit power of the radio frequency signal and a value of the null depth of the null beam.

S1160: The second electronic device receives the radio frequency signal reflected by the to-be-imaged object, and performs imaging on the to-be-imaged object.

The second electronic device performs imaging based on the received radio frequency signal reflected by the to-be-imaged object. The radio frequency signal is sent based on the radio frequency signal sending strategy. Therefore, the signal energy intensity of the strong scatter in an image obtained after imaging is performed based on the radio frequency signal is basically consistent with the signal energy intensity of the another scatter. This avoids problems that a coherent speckle is generated in the image of radio frequency imaging due to the strong scatter, and the coherent speckle interferes with an image in a surrounding region. In addition, the energy of the strong scatter in the collected radio frequency signal is greatly reduced. Therefore, input saturation of the second electronic device is not caused. This accordingly improves imaging energy of a weak scatter in the to-be-imaged object, and finally improves imaging quality of the entire to-be-imaged object.

According to the imaging method based on radio frequency signal transmission in this application, the radio frequency signal sending strategy is determined based on the obtained position and intensity of the strong scatter. The radio frequency signal sending strategy includes at least one or more of the following: reducing the transmit power of the radio frequency signal within the first range, adjusting the antenna beam direction to the first direction, or adjusting the antenna beam in the direction of the strong scatter to the null beam. The radiation range of the antenna beam within the first range includes the strong scatter, and the first direction is the direction in which the antenna beam does not cover the strong scatter. Sending the radio frequency signal by using the radio frequency signal sending strategy may reduce the signal energy intensity of the strong scatter, and reduce interference of the strong scatter to the another scatter, so that an imaging capability of the another weak scatter is enhanced. In this way, imaging quality of an entire image is finally enhanced.

This application further provides another example of an imaging method based on radio frequency signal transmission. In the method, range pulse data corresponding to a strong scatter is suppressed, so that an amplitude of the strong scatter is suppressed, thereby reducing an intensity of the strong scatter in a final imaging result and side lobe interference caused by the strong scatter. In this way, an entire imaging capability is enhanced.

Before the method is described below, a diagram of a system architecture to which the method is applicable is first described in detail.

FIG. 15 is an architectural diagram of another example of an imaging system based on radio frequency signal transmission according to an embodiment of this application. As shown in FIG. 15, the system includes a third electronic device and a fourth electronic device. The third electronic device is configured to: receive second information sent by the fourth electronic device, and send target pulse compression data to the fourth electronic device. The fourth electronic device is configured to: send the second information to the third electronic device, and perform image fusion based on the received target pulse compression data.

It should be noted that the third electronic device may be a transmitter or a receiver. When the third electronic device is a transmitter, the transmitter may be a network device or a terminal device. When the third electronic device is a receiver, the receiver may be a network device or a terminal device. The fourth electronic device may be an electronic device having only a processing function, for example, a network device or a terminal device, or the fourth electronic device may be a receiver or a transmitter having a receiving/sending function.

It should be further noted that, because an imaging capability of a single electronic device is weak, at least one third electronic device is required to sample a to-be-imaged object, and then a final image is formed through fusion performed by the fourth electronic device.

In some embodiments, the second information sent by the fourth electronic device may include position information of the strong scatter, and may further include intensity information of the strong scatter. When the second information received by the third electronic device is the position information of the strong scatter, or when the second information received by the third electronic device is the position information and the intensity information of the strong scatter, the third electronic device may determine an amplitude suppression strategy of the strong scatter based on the second information, and then suppress the amplitude of the strong scatter.

In some other embodiments, the second information sent by the fourth electronic device may be the amplitude suppression strategy that is of the strong scatter and that is determined based on the position information or the intensity information of the strong scatter. Then, the third electronic device suppresses the intensity of the strong scatter based on the amplitude suppression strategy of the strong scatter.

Optionally, when the second information includes the intensity information of the strong scatter, the amplitude suppression strategy of the strong scatter may include an attenuation value of the amplitude of the strong scatter. The attenuation value may be represented by ΔA.

Optionally, when the second information includes the intensity information of the strong scatter, the amplitude suppression strategy of the strong scatter may further include a suppression distance range. The distance range indicates scatters within a preset range including the strong scatter, and the distance range may be represented by ΔR.

It can be learned that, when the third electronic device suppresses the amplitude of the strong scatter in range pulse compression data based on the amplitude suppression strategy of the strong scatter, the amplitude of the strong scatter may be reduced, thereby reducing interference of the strong scatter to another scatter. Then, suppressed pulse compression data is sent to the fourth electronic device for image fusion, and the intensity of the strong scatter in the fused image is reduced. In this way, imaging quality of an entire image is enhanced.

The following describes in detail another example of an imaging method based on radio frequency signal transmission according to an embodiment of this application with reference to the accompanying drawings.

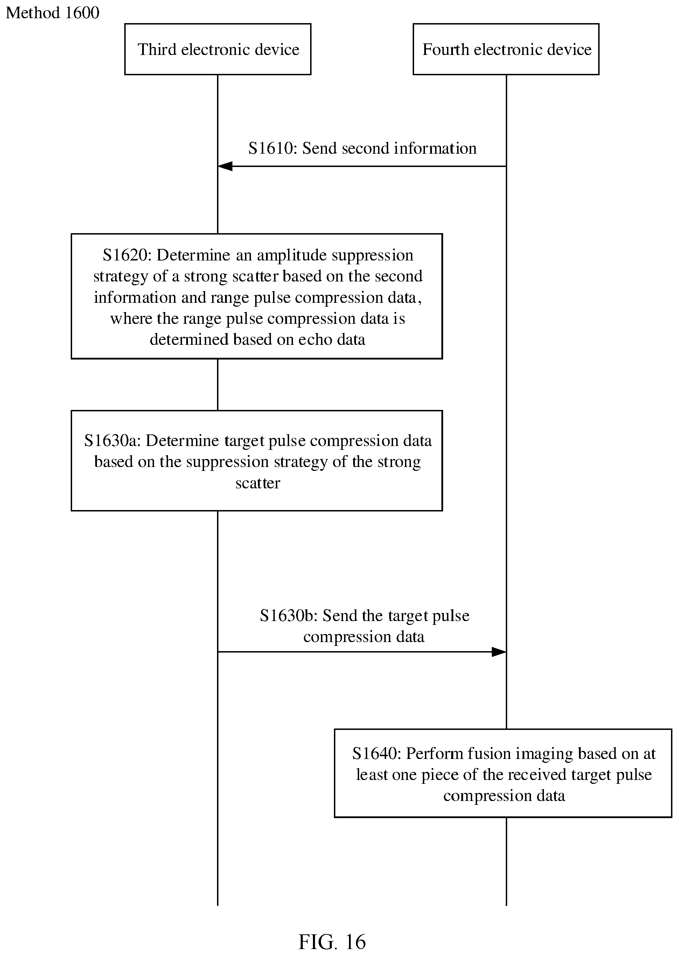

FIG. 16 is a schematic flowchart of an imaging method 1600 based on radio frequency signal transmission according to an embodiment of this application from a perspective of device interaction. As shown in FIG. 16, the method 1600 may include step S1610 to step S1640. The following describes in detail the steps in the method 1600 with reference to FIG. 16.

It should be understood that, in this embodiment of this application, the method 1600 is described by using an example in which the method 1600 is performed by a third electronic device and a fourth electronic device. By way of an example but not a limitation, the method 1600 may alternatively be performed by a chip used in the third electronic device and a chip used in the fourth electronic device.

S1610: The fourth electronic device sends second information to the third electronic device.

In this embodiment of this application, the third electronic device may reduce an amplitude of a strong scatter in echo data after receiving the echo data used for imaging, thereby reducing impact of the strong scatter in an imaged image on another scatter.

The fourth electronic device may send the second information to the third electronic device after determining position information of the strong scatter, so that the third electronic device may suppress the amplitude of the strong scatter based on the second information.

In a possible implementation, the second information may be the position information of the strong scatter; or in addition to the position information of the strong scatter, the second information may further include intensity information of the strong scatter.

In another possible implementation, the second information is an amplitude suppression strategy that is of the strong scatter and that is determined by the fourth electronic device based on the position information or the intensity information of the strong scatter.

Specifically, the fourth electronic device may receive a previous radio frequency signal, then perform imaging based on the previous radio frequency signal, determine information about the strong scatter in a to-be-imaged object in an imaging result, and finally determine the amplitude suppression strategy of the strong scatter based on the information about the strong scatter.

Optionally, when the information about the strong scatter includes amplitude information of the strong scatter, the amplitude suppression strategy of the strong scatter may include an attenuation value of the amplitude of the strong scatter. The attenuation value may be represented by ΔA.

Optionally, when the information about the strong scatter includes amplitude information of the strong scatter, the amplitude suppression strategy of the strong scatter may further include a suppression distance range. The distance range may be represented by ΔR.

In a possible implementation, when the fourth electronic device sends the amplitude suppression strategy of the strong scatter to the third electronic device, the amplitude suppression strategy of the strong scatter may be indicated by using one bit, that is, the fourth electronic device may send a bit value 1 to the third electronic device.

Certainly, the amplitude suppression strategy of the strong scatter may alternatively be indicated in another manner, for example, a zero bit. This is not limited in this embodiment of this application.

S1620: The third electronic device determines the amplitude suppression strategy of the strong scatter based on the second information and range pulse compression data, where the range pulse compression data is determined based on the echo data.

In some embodiments, after obtaining a radio frequency signal sent by a radio frequency signal sending device, the third electronic device converts the radio frequency signal into the echo data by using an ADC, performs range pulse compression on the echo data to obtain the range pulse compression data, then determines, in the range pulse compression data, a place in which signal energy is concentrated, namely, a position of the strong scatter, and finally suppresses the amplitude of the strong scatter.

It should be understood that pulse compression is to transmit a modulated pulse (a wide pulse) with a sufficiently long pulse width. In this way, sufficient energy is transmitted in a case of a limited power to provide a long enough detection range, and then to "compress" an echo of the wide pulse into a narrow pulse through matched filtering processing during receiving, so that a sufficiently high range resolution can be obtained.

In some embodiments, to suppress the amplitude of the strong scatter, the third electronic device determines the amplitude suppression strategy of the strong scatter based on the second information and the range pulse compression data after obtaining the range pulse compression data and the second information.

In a possible implementation, when the second information is the position information of the strong scatter, the amplitude suppression strategy of the strong scatter may be reducing the amplitude of the strong scatter in the range pulse compression data, or the amplitude suppression strategy of the strong scatter may be reducing an amplitude of a scatter within a preset range including the strong scatter in the range pulse compression data.

In another possible implementation, when the second information is the position information and the intensity information of the strong scatter, the amplitude suppression strategy of the strong scatter may be an attenuation value of the amplitude of the strong scatter in the range pulse compression data, or the amplitude suppression strategy of the strong scatter may be an amplitude of a scatter within a preset range including the strong scatter in the range pulse compression data.

In some other embodiments, the third electronic device may determine, based on the position information of the strong scatter, a propagation distance of a radio frequency signal reflected by the strong scatter, then determine a range cell of the strong scatter based on the propagation distance of the radio frequency signal and the range pulse compression data, and determine the amplitude suppression strategy of the strong scatter based on the second information and the range cell of the strong scatter.

Specifically, after receiving the information about the strong scatter, the third electronic device calculates the propagation distance of the radio frequency signal based on a position of the third electronic device, a position of the radio frequency signal sending device, and the position of the strong scatter; and determines, in the range pulse compression data based on the propagation distance of the radio frequency signal, the range cell in which the strong scatter is located.

In a possible implementation, when the second information is the position information of the strong scatter, the amplitude suppression strategy of the strong scatter includes: reducing an amplitude of the range cell of the strong scatter, and/or reducing an amplitude within a preset range including the range cell of the strong scatter.

In another possible implementation, when the second information is the position information and the intensity information of the strong scatter, the amplitude suppression strategy of the strong scatter may be an attenuation value of the amplitude of the range cell of the strong scatter, or the amplitude suppression strategy of the strong scatter may be an attenuation value of an amplitude of a scatter within the preset range including the range cell of the strong scatter.

It should be understood that the range cell may be a range cell for one-dimensional imaging, or may be a range-azimuth unit for two-dimensional imaging, or may be a range-azimuth-elevation unit for three-dimensional imaging. This is not limited in this application.

It should be noted that, when the second information received by the third electronic device is the amplitude suppression strategy of the strong scatter, the third electronic device may not perform step S1620.

It should be further noted that a method of determining the amplitude suppression strategy of the strong scatter by the fourth electronic device is consistent with a method of determining the amplitude suppression strategy of the strong scatter by the third electronic device, and details are not described herein again.

S1630a: The third electronic device determines target pulse compression data based on the suppression strategy of the strong scatter.

S1630b: The third electronic device sends the target pulse compression data to the fourth electronic device.

The third electronic device suppresses the amplitude of the strong scatter in the range pulse compression data based on the determined suppression strategy of the strong scatter, to obtain the final target pulse compression data, and then sends the target pulse compression data to the fourth electronic device.

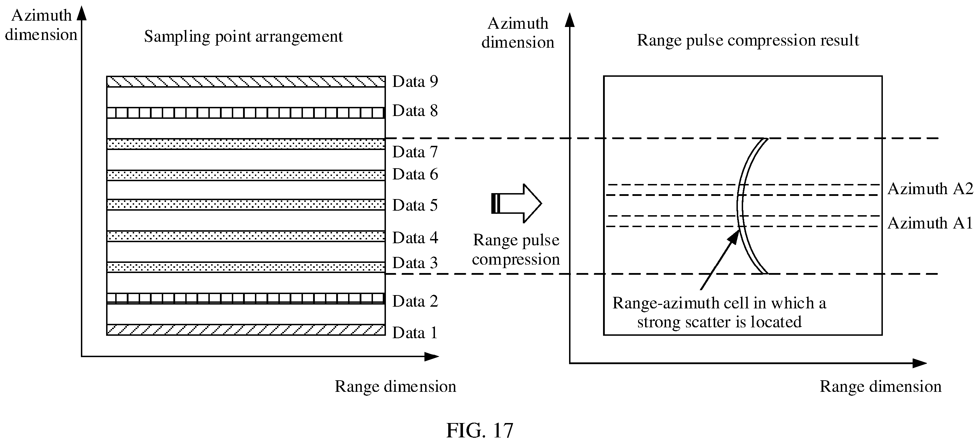

For example, two-dimensional imaging is used as an example to describe how to suppress the amplitude of the strong scatter by the range cell in which the strong scatter is located. In two-dimensional imaging, echo data received by the third electronic device is two-dimensional data, and dimensions are a range dimension and an azimuth dimension. FIG. 17 is a diagram of suppressing the intensity of the strong scatter for the range cell in which the strong scatter is located during two-dimensional imaging. As shown in FIG. 17, each row in a left part of the figure represents a group of echo data sampling points in the range dimension, the echo data sampling points constitute an echo data matrix, and the echo data matrix includes data 1, data 2, ..., and data 9. Performing range pulse compression on each row is equivalent to performing matched filtering on each piece of sampled data to obtain a range pulse compression result in a right part of the figure. It is assumed that, in the left part of the figure, a reflected signal of the strong scatter is located in the data 3 to the data 7; and in the right part of the figure, pulse compression data of the strong scatter is located in a range-azimuth unit corresponding to a curved region. A strategy of performing suppression on the strong scatter in a range pulse compression result is to suppress a data amplitude of the range-azimuth unit in the curved region.

It should be noted that, because a single third electronic device has a weak imaging capability, although good imaging effect may be achieved in a range dimension, an azimuth dimension of each scatter in the to-be-imaged object cannot be determined, and the azimuth dimension of each scatter can be determined only by a plurality of third electronic devices. Therefore, the plurality of third electronic devices need to send suppressed range pulse compression data to the fourth electronic device, and the fourth electronic device performs fusion imaging.

S1640: The fourth electronic device performs fusion imaging based on at least one piece of the received target pulse compression data.

In this embodiment of this application, after receiving the suppressed range pulse compression data sent by the plurality of third electronic devices, the fourth electronic device determines, on the image based on the suppressed range pulse compression data, a final imaging result of the scatter in the to-be-imaged object.

In some embodiments, after receiving target pulse compression data sent by the plurality of third electronic devices, the fourth electronic device performs stitching processing on a plurality of pieces of pulse compression data, to obtain a range dimension and an azimuth dimension of each scatter in the image, to form a final imaging result. Because the amplitude of the strong scatter in the target pulse compression data is suppressed, an intensity of the strong scatter relative to another scatter is reduced in the image obtained after the fourth electronic device finally performs fusion imaging.

According to the imaging method based on radio frequency signal transmission in this application, the third electronic device suppresses the amplitude of the strong scatter in the pulse compression data based on the suppression strategy of the strong scatter, so that the intensity of the strong scatter can be reduced, thereby reducing interference of the strong scatter to the another scatter. Then, the target pulse compression data obtained through suppression is sent to the fourth electronic device for image fusion, and the intensity of the strong scatter in the fused image is reduced. In this way, imaging quality of an entire image is enhanced.

To reduce impact of the strong scatter on imaging quality to a greater extent, this application further provides another example of an imaging method based on radio frequency signal transmission. In the method, a transmit power or a direction of a radio frequency signal is adjusted to reduce an energy intensity of a signal irradiated on a strong scatter. In addition, after echo data corresponding to the radio frequency signal is obtained, pulse compression is performed on a range dimension in the echo data, and then an amplitude of the strong scatter is suppressed. This further reduces the amplitude of the strong scatter in pulse compression data, and reduces an intensity of the strong scatter in a final imaging result and side lobe interference caused by the strong scatter. In this way, an entire imaging capability is enhanced.

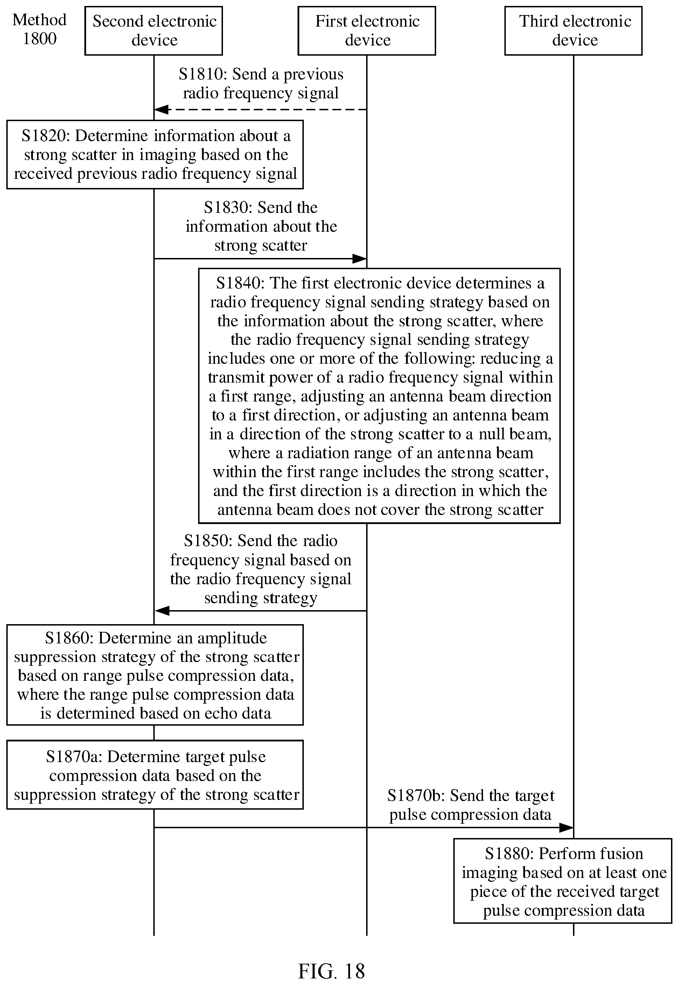

The following specifically describes still another example of an imaging method based on radio frequency signal transmission according to an embodiment of this application with reference to FIG. 18. FIG. 18 is a schematic flowchart of still another example of an imaging method based on radio frequency signal transmission according to an embodiment of this application. As shown in FIG. 18, the method 1800 includes S1810 to S1880.

S1810: A first electronic device sends a previous radio frequency signal to a second electronic device.

S1820: The second electronic device determines information about a strong scatter in imaging based on the received previous radio frequency signal.

S1830: The second electronic device sends the information about the strong scatter to the first electronic device.

S1840: The first electronic device determines a radio frequency signal sending strategy based on the information about the strong scatter, where the radio frequency signal sending strategy includes one or more of the following: reducing a transmit power of a radio frequency signal within a first range, adjusting an antenna beam direction to a first direction, or adjusting an antenna beam in a direction of the strong scatter to a null beam, where a radiation range of an antenna beam within the first range includes the strong scatter, and the first direction is a direction in which the antenna beam does not cover the strong scatter.

S1850: The first electronic device sends the radio frequency signal based on the radio frequency signal sending strategy.

For step S1810 to step S1850, refer to the descriptions of step S1110 to step S1150. Details are not described herein again.

S1860: The second electronic device determines an amplitude suppression strategy of the strong scatter based on range pulse compression data, where the range pulse compression data is determined based on echo data.

S1870a: The second electronic device determines target pulse compression data based on the suppression strategy of the strong scatter.

S1870b: The second electronic device sends the target pulse compression data to a third electronic device.

S1880: The third electronic device performs fusion imaging based on at least one piece of the received target pulse compression data.

For step S1860 to step S1880, refer to the descriptions of step S1620 to step S1640. Details are not described herein again.

It should be noted that the second electronic device in step S1860 to step S1880 may be understood as the third electronic device in step S1620 to step S1640, and the third electronic device in step S1860 to step S1880 may be understood as the fourth electronic device in step S1620 to step S1640.

It should be further noted that, a difference between step S1860 and step S1620 is that the second information does not need to be received in step S1860. This is because, in step S1820, the information about the strong scatter in imaging may be determined based on the received previous radio frequency signal.

In conclusion, according to the imaging method based on radio frequency signal transmission in the method 1100, the radio frequency signal sending strategy is determined based on the obtained position and intensity of the strong scatter. The radio frequency signal sending strategy includes at least one or more of the following: reducing the transmit power of the radio frequency signal within the first range, adjusting the antenna beam direction to the first direction, or adjusting the antenna beam in the direction of the strong scatter to the null beam. The radiation range of the antenna beam within the first range includes the strong scatter, and the first direction is the direction in which the antenna beam does not cover the strong scatter. The radio frequency signal sending strategy is used to reduce the energy intensity of the signal radiated on the strong scatter. When the energy intensity of the signal radiated on the strong scatter is reduced, the intensity of the strong scatter relative to another scatter is reduced accordingly, and interference of the strong scatter to imaging of the another scatter is finally reduced. In addition, because the signal energy intensity of the strong scatter is reduced, a problem of input saturation of a receiver is resolved, so that an imaging capability of another weak scatter is enhanced. In this way, imaging quality of an entire image is enhanced.

In another example of the imaging method based on radio frequency signal transmission in the method 1600, the third electronic device suppresses the amplitude of the strong scatter in the pulse compression data based on the suppression strategy of the strong scatter, so that the intensity of the strong scatter can be reduced, thereby reducing interference of the strong scatter to the another scatter. Then, the target pulse compression data obtained through suppression is sent to the fourth electronic device for image fusion, and the intensity of the strong scatter in the fused image is reduced. In this way, imaging quality of an entire image is enhanced.

The method 1100 is compared with the method 1600. Because the signal energy intensity of the strong scatter is reduced to improve imaging quality of the to-be-imaged object, the method 1100 may further resolve a problem of input saturation of the second electronic device to further improve imaging quality of the to-be-imaged object. In the method 1600, because data processing is performed based on the echo data of the reflected radio frequency signal received by the third electronic device to improve imaging quality of the to-be-imaged object, the method 1600 can only reduce the amplitude of the strong scatter to improve imaging quality of the to-be-imaged object.

In the method 1800, the radio frequency signal obtained by the second electronic device is first sent based on the radio frequency signal sending strategy, and the second electronic device suppresses the amplitude of the strong scatter based on the range pulse compression data corresponding to the received reflected radio frequency signal. Therefore, the method 1800 achieves better imaging quality than the method 1100 and the method 1600.

It should be understood that the foregoing descriptions are merely intended to help a person skilled in the art better understand embodiments of this application, but are not intended to limit the scope of embodiments of this application. It is clear that a person skilled in the art may make various equivalent modifications or changes based on the foregoing examples. For example, some steps in the foregoing methods may be unnecessary, or some new steps may be added. Alternatively, any two or more of the foregoing embodiments are combined. A modified, changed, or combined solution also falls within the scope of embodiments of this application.

It should be further understood that division of manners, cases, categories, and embodiments in embodiments of this application is merely intended for ease of description, and should not constitute a particular limitation. Features in the manners, categories, cases, and embodiments may be combined without contradiction.

It should be further understood that numerals used in embodiments of this application are merely distinguished for ease of description, but are not intended to limit the scope of embodiments of this application. Sequence numbers of the foregoing processes do not mean execution sequences. The execution sequences of the processes should be determined based on functions and internal logic of the processes, and should not constitute any limitation on implementation processes of embodiments of this application.

It should be further understood that the foregoing descriptions of embodiments of this application emphasize differences between the embodiments. For same or similar parts that are not mentioned, refer to the embodiments. For brevity, details are not described herein again.

With reference to FIG. 10 to FIG. 18, the foregoing describes the embodiments of the imaging method based on radio frequency signal transmission according to embodiments of this application. The following describes electronic devices (a first electronic device, a second electronic device, a third electronic device, and a fourth electronic device) provided in embodiments of this application.

In this embodiment, the electronic device may be divided into functional modules according to the foregoing methods. For example, each functional module may be obtained through division based on each corresponding function, or two or more functions may be integrated into one processing module. The integrated module may be implemented in a form of hardware. It should be noted that module division in this embodiment is an example and is merely logical function division. During actual implementation, there may be another division manner.

It should be noted that related content of the steps in the foregoing method embodiments may be referenced to function descriptions of corresponding functional modules, and details are not described herein again.

The electronic device provided in embodiments of this application is configured to perform any imaging method based on radio frequency signal transmission in the foregoing method embodiments, and therefore can achieve same effects as the foregoing implementations. When an integrated unit is used, the terminal device may include a processing module, a storage module, and a communication module. The processing module may be configured to control and manage an action of the electronic device. For example, the processing module may be configured to support the electronic device in performing steps performed by a processing unit. The storage module may be configured to support storage of program code, data, and the like. The communication module may be configured to support communication between the electronic device and another device.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device that interacts with another electronic device, such as a radio frequency circuit, a Bluetooth chip, or a Wi-Fi chip.

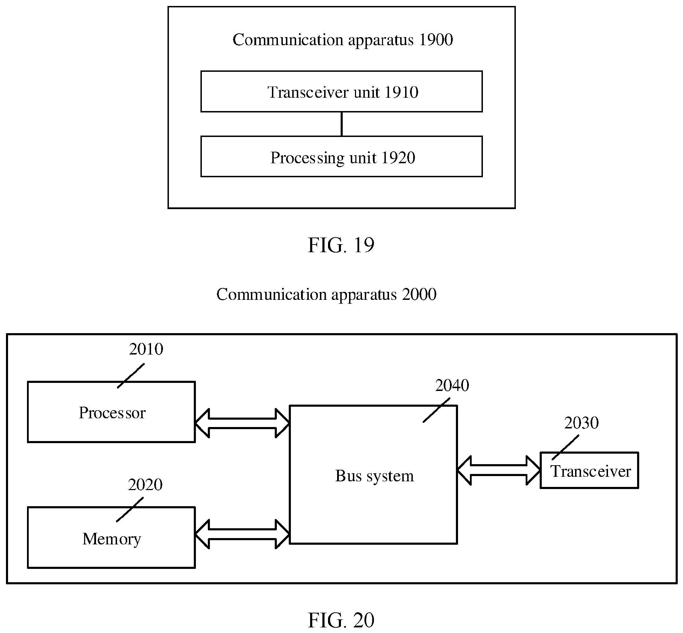

For example, FIG. 19 is a block diagram of a communication apparatus 1900 according to an embodiment of this application. The communication apparatus 1900 may correspond to the electronic device described in the embodiments of the method 1100 to the method 1800, or may be a chip or a component used in the electronic device. In addition, modules or units in the communication apparatus 1100 are separately configured to perform actions or processing processes performed by the electronic device described in the embodiments of the method 1100 to the method 1800.

As shown in FIG. 19, the communication apparatus 1900 includes a transceiver unit 1910 and a processing unit 1920. The transceiver unit 1910 is configured to send or receive a specific signal under driving of the processing unit 1920.

### In some embodiments:

The transceiver unit 1910 is configured to receive first information. The first information is determined based on information about a strong scatter in a to-be-imaged object, and the information about the strong scatter includes position information of the strong scatter and/or intensity information of the strong scatter.

The processing unit 1920 is configured to determine a radio frequency signal sending strategy based on the first information. The radio frequency signal sending strategy includes at least one or more of the following: reducing a transmit power of a radio frequency signal within a first range, adjusting an antenna beam direction to a first direction, or adjusting an antenna beam in a direction of the strong scatter to a null beam. A radiation range of an antenna beam within the first range includes the strong scatter, and the first direction is a direction in which the antenna beam does not cover the strong scatter.

The transceiver unit 1910 is further configured to send the radio frequency signal to the to-be-imaged object based on the radio frequency signal sending strategy.

According to the communication apparatus provided in this application, a position and an intensity of the strong scatter are first obtained, and then the radio frequency signal sending strategy is determined based on the position and the intensity of the strong scatter. The radio frequency signal sending strategy reduces an energy intensity of a signal radiated on the strong scatter, reduces an intensity of the strong scatter relative to another scatter, and finally reduces interference of the strong scatter to imaging of the another scatter. In addition, because the signal energy intensity of the strong scatter is reduced, a problem of input saturation of a receiver is resolved, so that an imaging capability of another weak scatter is enhanced. In this way, imaging quality of an entire image is enhanced.

Optionally, the transmit power of the radio frequency signal within the first range is determined based on the intensity information of the strong scatter.

Optionally, a null depth of the null beam is determined based on the intensity information of the strong scatter.

Optionally, the antenna beam direction is adjusted to the first direction in any one of the following manners: a continuous aperture illumination manner or a discontinuous aperture illumination manner.

Optionally, before receiving the first information, the transceiver unit 1910 is further configured to send a previous radio frequency signal. The previous radio frequency signal is used to determine the information about the strong scatter in the to-be-imaged object.

### In some other embodiments:

The transceiver unit 1910 is configured to send first information. The first information is determined based on information about a strong scatter in a to-be-imaged object, and the information about the strong scatter includes position information and/or intensity information of the strong scatter.

The transceiver unit 1910 is further configured to receive a radio frequency signal reflected by the to-be-imaged object. The radio frequency signal is sent based on a radio frequency signal sending strategy, and the radio frequency signal sending strategy includes at least one or more of the following: reducing a transmit power of a radio frequency signal within a first range, adjusting an antenna beam direction to a first direction, or adjusting an antenna beam in a direction of the strong scatter to a null beam. A radiation range of an antenna beam within the first range includes the strong scatter, and the first direction is a direction in which the antenna beam does not cover the strong scatter. The radio frequency signal sending strategy is determined based on the first information.

The processing unit 1920 is configured to perform imaging on the to-be-imaged object.

According to the communication apparatus provided in this application, a receiver sends the information about the strong scatter in the to-be-imaged object to a transmitter, so that the transmitter can determine the radio frequency signal sending strategy based on the information about the strong scatter in the to-be-imaged object, and then the receiver can perform imaging based on the radio frequency signal reflected by the to-be-imaged object. The radio frequency signal is transmitted based on the radio frequency signal sending strategy. Therefore, an intensity of the strong scatter relative to another scatter is reduced, and interference of the strong scatter to imaging of the another scatter is finally reduced. In addition, because the signal energy intensity of the strong scatter is reduced, a problem of input saturation of the receiver is resolved, so that imaging capability of another weak scatter is enhanced. In this way, imaging quality of an entire image is enhanced.

Optionally, when the first information includes the radio frequency signal sending strategy, the transceiver unit 1910 is further configured to receive a previous radio frequency signal before sending the first information.

The processing unit 1920 is further configured to: determine the information about the strong scatter in the to-be-imaged object based on the previous radio frequency signal, and determine the radio frequency signal sending strategy based on the information about the strong scatter.

Optionally, the transmit power of the radio frequency signal within the first range is determined based on the intensity information of the strong scatter.

Optionally, a null depth of the null beam is determined based on the intensity information of the strong scatter.

Optionally, the antenna beam direction is adjusted to the first direction in any one of the following manners: a continuous aperture illumination manner or a discontinuous aperture illumination manner.

### In still some other embodiments:

The transceiver unit 1910 is configured to receive second information and echo data. The second information is determined based on information about a strong scatter in a to-be-imaged object, the information about the strong scatter includes position information and/or intensity information of the strong scatter, and the echo data is determined based on a radio frequency signal reflected by the to-be-imaged object.

The processing unit 1920 is configured to determine an amplitude suppression strategy of the strong scatter based on the second information and range pulse compression data. The range pulse compression data is determined based on the echo data, and the amplitude suppression strategy of the strong scatter includes: reducing an amplitude of the strong scatter in the range pulse compression data, and/or reducing an amplitude of a scatter within a preset range including the strong scatter in the range pulse compression data.

The processing unit 1920 is further configured to determine target pulse compression data based on the amplitude suppression strategy of the strong scatter. The target pulse compression data includes an amplitude that is of the strong scatter in the range pulse compression data and that is obtained through suppression based on the amplitude suppression strategy of the strong scatter.

The transceiver unit 1910 is further configured to send the target pulse compression data.

According to the communication apparatus provided in this application, the amplitude of the strong scatter in the range pulse compression data is suppressed based on the second information, thereby reducing an intensity of the strong scatter in a final imaging result and side lobe interference caused by the strong scatter. In this way, an entire imaging capability is enhanced. The amplitude of the strong scatter in the range pulse compression data can be reduced to effectively suppress the amplitude of the strong scatter. To ensure suppression effect, the amplitude of the scatter within the preset range including the strong scatter in the range pulse compression data may also be reduced. If the target pulse data after suppression is used for imaging, the amplitude of the strong scatter in the imaging result is not very strong. In this way, imaging quality of an entire image is improved.

Optionally, the processing unit 1920 is further configured to determine, based on the position information of the strong scatter, a propagation distance of a radio frequency signal reflected by the strong scatter.

The processing unit 1920 is further configured to determine a range cell of the strong scatter based on the propagation distance of the radio frequency signal and the range pulse compression data.

The processing unit 1920 is further configured to determine the amplitude suppression strategy of the strong scatter based on the second information and the range cell of the strong scatter. The amplitude suppression strategy of the strong scatter includes: reducing an amplitude of the range cell of the strong scatter, and/or reducing an amplitude within a preset range including the range cell of the strong scatter.

Optionally, an attenuation value of the amplitude of the range cell of the strong scatter is determined based on the intensity information of the strong scatter.

Optionally, an attenuation value of the amplitude of the scatter within the preset range including the range cell of the strong scatter is determined based on the intensity information of the strong scatter.

### In yet some other embodiments:

The transceiver unit 1910 is configured to send second information. The second information is determined based on information about a strong scatter in a to-be-imaged object, and the information about the strong scatter includes position information and/or intensity information of the strong scatter.

The transceiver unit 1910 is further configured to receive at least one piece of target pulse compression data. The at least one piece of target pulse compression data is determined based on an amplitude suppression strategy of the strong scatter, the amplitude suppression strategy of the strong scatter includes: reducing an amplitude of the strong scatter in range pulse compression data, and/or reducing an amplitude within a preset range including the strong scatter in the range pulse compression data, and the amplitude suppression strategy of the strong scatter is determined based on the second information.

The processing unit 1920 is configured to perform fusion imaging on the at least one piece of target pulse compression data.

According to the communication apparatus provided in this application, the second information is sent, so that a third electronic device can obtain the information about the strong scatter or obtain the amplitude suppression strategy of the strong scatter. Then, the target pulse compression data obtained after the amplitude of the strong scatter is suppressed is received, and fusion imaging is performed on a plurality of pieces of target pulse compression data, so that final imaging quality is greatly improved.

Optionally, when the second information includes the amplitude suppression strategy of the strong scatter, the transceiver unit 1910 is further configured to receive a previous radio frequency signal before sending the second information.

Optionally, the processing unit 1920 is further configured to determine, based on the previous radio frequency signal, the information about the strong scatter in the to-be-imaged object.

Optionally, the processing unit 1920 determines the amplitude suppression strategy of the strong scatter based on the information about the strong scatter.

Optionally, when the information about the strong scatter includes the intensity information of the strong scatter, an attenuation value of an amplitude within a preset range including a range cell of the strong scatter is determined based on the intensity information of the strong scatter.

Optionally, when the information about the strong scatter includes the intensity information of the strong scatter, an attenuation value of an amplitude within a preset range including a range cell of the strong scatter is determined based on the intensity information of the strong scatter.

Further, the communication apparatus 1900 may include a storage unit, and the transceiver unit 1910 may be a transceiver, an input/output interface, or an interface circuit. The storage unit is configured to store instructions executed by the transceiver unit 1910 and the processing unit 1920. The transceiver unit 1910, the processing unit 1920, and the storage unit are coupled to each other. The storage unit stores the instructions. The processing unit 1920 is configured to execute the instructions stored in the storage unit. The transceiver unit 1910 is configured to send or receive a specific signal under driving of the processing unit 1920.

It should be understood that, for a specific process in which the units in the communication apparatus 1900 perform the corresponding steps, refer to the descriptions related to the electronic device with reference to the method 1100 to the method 1800 and the related embodiments in FIG. 11 to FIG. 18. For brevity, details are not described herein again.

It should be understood that the transceiver unit 1910 may be a transceiver, an input/output interface, or an interface circuit. The storage unit may be a memory. The processing unit 1920 may be implemented by a processor. FIG. 20 is a block diagram of another example of a communication apparatus 2000 according to an embodiment of this application. As shown in FIG. 20, the communication apparatus 2000 may include a processor 2010, a memory 2020, a transceiver 2030, and a bus system 2040. Components of the communication apparatus 2000 are coupled together through the bus system 2040. In addition to a data bus, the bus system 2040 may further include a power bus, a control bus, a status signal bus, and the like. However, for clear description, various buses are marked as the bus system 2040 in FIG. 20. For ease of illustration, FIG. 20 shows merely an example of the bus system 2040.

The communication apparatus 1900 shown in FIG. 19 or the communication apparatus 2000 shown in FIG. 20 can implement the steps performed by the electronic device in the embodiments of the method 1100 to the method 1800. For similar descriptions, refer to the descriptions in the foregoing corresponding methods. To avoid repetition, details are not described herein again.

It should be further understood that the communication apparatus 1900 shown in FIG. 19 or the communication apparatus 2000 shown in FIG. 20 may be a terminal device or a network device.

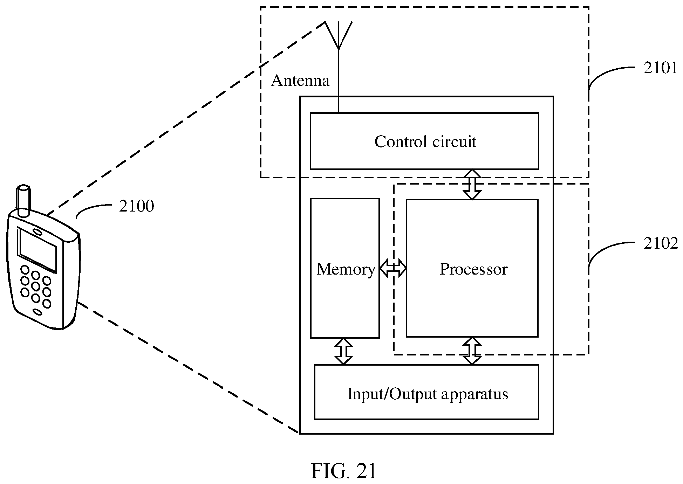

FIG. 21 is a diagram of a structure of a terminal device 2100 according to this application. The communication apparatus 1900 or the communication apparatus 2000 may be configured in the terminal device 2100. Alternatively, the communication apparatus 1900 or the communication apparatus 2000 may be the terminal device 2100. Alternatively, the terminal device 2100 may perform the actions performed by the electronic device in the method 1100 to the method 1800. Optionally, for ease of description, FIG. 21 shows only main components of the terminal device. As shown in FIG. 21, the terminal device 2100 includes a processor, a memory, a control circuit, an antenna, and an input/output apparatus.

The processor is mainly configured to process a communication protocol and communication data, control an entire terminal device, execute a software program, and process data of the software program, for example, is configured to support the terminal device in performing the actions described in the foregoing embodiments of the indication method for transmitting a precoding matrix. The memory is mainly configured to store the software program and the data, for example, store a codebook described in the foregoing embodiments. The control circuit is mainly configured to: perform conversion between a baseband signal and a radio frequency signal, and process the radio frequency signal. The control circuit and the antenna together may also be referred to as a transceiver, and are mainly configured to receive and send a radio frequency signal in a form of an electromagnetic wave. The input/output apparatus, for example, a touchscreen, a display, or a keyboard, is mainly configured to: receive data input by a user and output data to the user.

After the terminal device is powered on, the processor may read the software program in the storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, through the antenna, a radio frequency signal in a form of an electromagnetic wave. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 21 shows only one memory and only one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. Functions of the baseband processor and the central processing unit are integrated into the processor in FIG. 21. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in embodiments of this application, the antenna and the control circuit that have receiving and sending functions may be considered as a transceiver unit 2101 of the terminal device 2100, and the processor having a processing function may be considered as a processing unit 2102 of the terminal device 2100. As shown in FIG. 21, the terminal device 2100 includes the transceiver unit 2101 and the processing unit 2102. The transceiver unit may also be referred to as a transceiver, a transceiver machine, a transceiver apparatus, or the like. Optionally, a device that is in the transceiver unit 2101 and that is configured to implement a receiving function may be considered as a receiving unit, and a device that is in the transceiver unit 2101 and that is configured to implement a sending function may be considered as a sending unit. In other words, the transceiver unit 2101 includes the receiving unit and the sending unit. For example, the receiving unit may also be referred to as a receiver, a receive machine, a receiving circuit, or the like, and the sending unit may also be referred to as a transmitter, a transmit machine, a transmitting circuit, or the like.

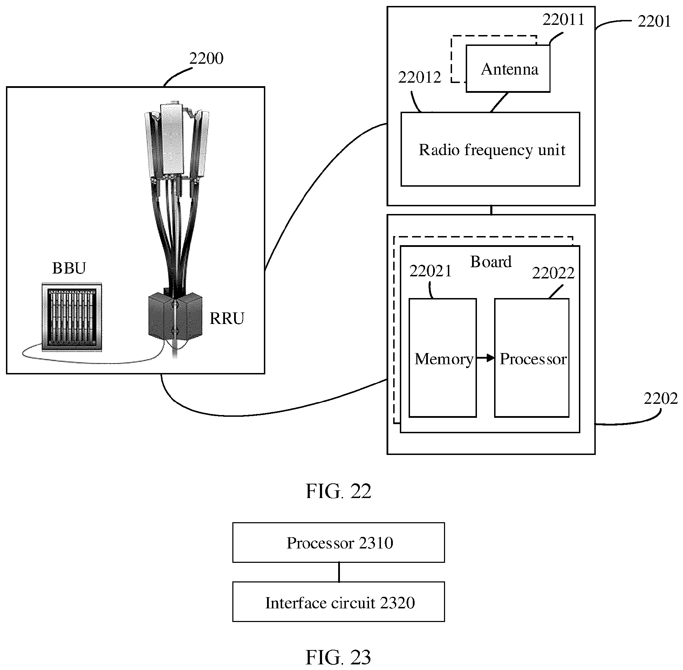

FIG. 22 is a diagram of a structure of a network device 2200 according to an embodiment of this application. The network device 2200 may be configured to implement functions of the network device in the foregoing methods. The network device 2200 includes one or more radio frequency units, for example, a remote radio unit (remote radio unit, RRU) 2201, and one or more baseband units (baseband units, BBUs) (which may also be referred to as a digital unit, (digital unit, DU)) 2202. The RRU 2201 may be referred to as a transceiver unit, a transceiver machine, a transceiver circuit, a transceiver, or the like, and may include at least one antenna 22011 and a radio frequency unit 22012. The RRU 2201 is mainly configured to: receive or send a radio frequency signal, and perform conversion between a radio frequency signal and a baseband signal, for example, configured to send a signaling message in the foregoing embodiments to a terminal device. The BBU 2202 is mainly configured to: perform baseband processing, control a base station, and the like. The RRU 2201 and the BBU 2202 may be physically disposed together, or may be physically separated, namely, in a distributed base station.

The BBU 2202 is a control center of the base station, may also be referred to as a processing unit, and is mainly configured to complete a baseband processing function, such as channel coding, multiplexing, modulation, or spectrum spreading. For example, the BBU (the processing unit) 2202 may be configured to control the base station 2200 to perform an operation procedure related to the network device in the foregoing method embodiments.

In an example, the BBU 2202 may include one or more boards. A plurality of boards may jointly support a radio access network (for example, an LTE system or a 5G system) of a single access standard, or may respectively support radio access networks of different access standards. The BBU 2202 further includes a memory 22021 and a processor 22022. The memory 22021 is configured to store necessary instructions and necessary data. For example, the memory 22021 stores the codebook and the like in the foregoing embodiments. The processor 22022 is configured to control the base station to perform a necessary action, for example, configured to control the base station to perform an operation procedure related to the network device in the foregoing method embodiments. The memory 22021 and the processor 22022 may serve one or more boards. In other words, a memory and a processor may be disposed on each board. Alternatively, a plurality of boards may share a same memory and a same processor. In addition, a necessary circuit may further be disposed on each board.

In a possible implementation, with development of a system-on-chip (system-on-chip, SoC) technology, all or some of functions of the parts 2202 and 2201 may be implemented by using the SoC technology, for example, implemented by using one base station function chip. The base station function chip integrates components such as a processor, a memory, and an antenna port. A program of a base station-related function is stored in the memory, and the processor executes the program to implement the base station-related function. Optionally, the base station function chip can also read from an external memory of the chip, to implement the base station-related function.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in a form of software invoked by the processing element. In an example, a unit in any one of the foregoing apparatuses may be one or more integrated circuits configured to implement the foregoing methods, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the unit in the apparatus may be implemented in a form of scheduling a program by a processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

An embodiment of this application further provides a chip system. As shown in FIG. 23, the chip system includes at least one processor 2310 and at least one interface circuit 2320. The processor 2310 and the interface circuit 2320 may be interconnected through a line. For example, the interface circuit 2320 may be configured to receive a signal from another apparatus (for example, a memory of the terminal device 2100). For another example, the interface circuit 2320 may be configured to send a signal to another apparatus (for example, the processor 2310). For example, the interface circuit 2320 may read instructions stored in a memory, and send the instructions to the processor 2310. When the instructions are executed by the processor 2310, the terminal device is enabled to perform the steps performed by the terminal device in the foregoing embodiments. Certainly, the chip system may further include another discrete device. This is not specifically limited in embodiments of this application.

An embodiment of this application further provides an imaging system based on radio frequency signal transmission. The system includes the first electronic device and the second electronic device provided in the foregoing method embodiments.

An embodiment of this application further provides an imaging system based on radio frequency signal transmission. The system includes the third electronic device and the fourth electronic device provided in the foregoing method embodiments.

An embodiment of this application further provides a computer-readable storage medium, configured to store computer program code. The computer program includes instructions used to perform any imaging method based on radio frequency signal transmission in embodiments of this application. The readable medium may be a read-only memory (read-only memory, ROM) or a random access memory (random access memory, RAM). This is not limited in embodiments of this application.

This application further provides a computer program product. The computer program product includes instructions. When the instructions are executed, a network device and a terminal device are enabled to perform corresponding operations in the foregoing methods.

An embodiment of this application further provides a chip disposed in a communication apparatus. The chip includes a processing unit and a communication unit. The processing unit may be, for example, a processor, and the communication unit may be, for example, an input/output interface, a pin, or a circuit. The processing unit may execute computer instructions, so that the communication apparatus performs any imaging method based on radio frequency signal transmission in the foregoing embodiments of this application.

Optionally, the computer instructions are stored in a storage unit.

Optionally, the storage unit is a storage unit in the chip, for example, a register or a cache. Alternatively, the storage unit may be a storage unit that is in the terminal and that is located outside the chip, for example, a ROM, another type of static storage device that can store static information and instructions, or a random RAM. Any processor mentioned above may be a CPU, a microprocessor, an ASIC, or one or more integrated circuits configured to control program execution of the feedback information transmission method. The processing unit and the storage unit may be decoupled, are disposed on different physical devices respectively, and are connected in a wired or wireless manner to implement respective functions of the processing unit and the storage unit, to support the system chip in implementing various functions in the foregoing embodiments. Alternatively, the processing unit and the memory may be coupled to a same device.

The terminal device, the computer-readable storage medium, the computer program product, or the chip provided in embodiments is configured to perform the corresponding method provided above. Therefore, for beneficial effects that can be achieved, refer to the beneficial effects of the corresponding method provided above. Details are not described herein again.

It may be understood that the memory in embodiments of this application may be a volatile memory or a non-volatile memory, or may include a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. There are a plurality of different types of RAMs, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch-link DRAM, SLDRAM), and a direct rambus random access memory (direct rambus RAM, DR RAM).

In this application, names may be assigned to various objects such as messages/information/devices/network elements/systems/apparatuses/actions/operations/procedures/concepts. It can be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

All or some of the methods in embodiments of this application may be implemented by software, hardware, firmware, or any combination thereof. When software is used to implement the embodiments, all or some of the embodiments may be implemented in a form of a computer program product. The computer program product includes one or more computer programs or instructions. When the computer program or the instructions are loaded and executed on a computer, the procedures or functions in embodiments of this application are all or partially executed. The computer may be a general-purpose computer, a dedicated computer, a computer network, or another programmable apparatus. The computer program or the instructions may be stored in a computer-readable storage medium, or may be transmitted through the computer-readable storage medium. The computer-readable storage medium may be any usable medium accessible by the computer, or a data storage device, for example, a server, integrating one or more usable media.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be or may not be physically separate, and parts displayed as units may be or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a readable storage medium, and includes several instructions for indicating a computer device (which may be a personal computer, a server, or a network device) to perform all or some of the steps of the methods described in embodiments of this application. The readable storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An imaging method based on radio frequency signal transmission, wherein the method comprises:
receiving first information, wherein the first information is determined based on information about a strong scatter in a to-be-imaged object, and the information about the strong scatter comprises position information of the strong scatter and/or intensity information of the strong scatter;
determining a radio frequency signal sending strategy based on the first information, wherein the radio frequency signal sending strategy comprises one or more of the following: reducing a transmit power of a radio frequency signal within a first range, adjusting an antenna beam direction to a first direction, or adjusting an antenna beam in a direction of the strong scatter to a null beam, wherein a radiation range of an antenna beam within the first range comprises the strong scatter, and the first direction is a direction in which the antenna beam does not cover the strong scatter; and
sending the radio frequency signal to the to-be-imaged object based on the radio frequency signal sending strategy.

2. The method according to claim 1, wherein the transmit power of the radio frequency signal within the first range is determined based on the intensity information of the strong scatter.

3. The method according to claim 1 or 2, wherein a null depth of the null beam is determined based on the intensity information of the strong scatter.

4. The method according to any one of claims 1 to 3, wherein the antenna beam direction is adjusted to the first direction in any one of the following manners: a continuous aperture illumination manner or a discontinuous aperture illumination manner.

5. The method according to any one of claims 1 to 4, wherein before the receiving first information, the method further comprises:
sending a previous radio frequency signal, wherein the previous radio frequency signal is used to determine the information about the strong scatter in the to-be-imaged object.

6. An imaging method based on radio frequency signal transmission, wherein the method comprises:
sending first information, wherein the first information is determined based on information about a strong scatter in a to-be-imaged object, and the information about the strong scatter comprises position information and/or intensity information of the strong scatter; and
receiving a radio frequency signal reflected by the to-be-imaged object, and imaging the to-be-imaged object, wherein the radio frequency signal is sent based on a radio frequency signal sending strategy, the radio frequency signal sending strategy comprises at least one or more of the following: reducing a transmit power of a radio frequency signal within a first range, adjusting an antenna beam direction to a first direction, or adjusting an antenna beam in a direction of the strong scatter to a null beam, wherein a radiation range of an antenna beam within the first range comprises the strong scatter, the first direction is a direction in which the antenna beam does not cover the strong scatter, and the radio frequency signal sending strategy is determined based on the first information.

7. The method according to claim 6, wherein when the first information comprises the radio frequency signal sending strategy, before the sending first information, the method further comprises:
receiving a previous radio frequency signal;
determining, based on the previous radio frequency signal, the information about the strong scatter in the to-be-imaged object; and
determining the radio frequency signal sending strategy based on the information about the strong scatter.

8. The method according to claim 6 or 7, wherein the transmit power of the radio frequency signal within the first range is determined based on the intensity information of the strong scatter.

9. The method according to any one of claims 6 to 8, wherein a null depth of the null beam is determined based on the intensity information of the strong scatter.

10. The method according to any one of claims 6 to 9, wherein the antenna beam direction is adjusted to the first direction in any one of the following manners: a continuous aperture illumination manner or a discontinuous aperture illumination manner.

11. An imaging method based on radio frequency signal transmission, wherein the method comprises:
receiving second information and echo data, wherein the second information is determined based on information about a strong scatter in a to-be-imaged object, the information about the strong scatter comprises position information and/or intensity information of the strong scatter, and the echo data is determined based on a radio frequency signal reflected by the to-be-imaged object;
determining an amplitude suppression strategy of the strong scatter based on the second information and range pulse compression data, wherein the range pulse compression data is determined based on the echo data, and the amplitude suppression strategy of the strong scatter comprises: reducing an amplitude of the strong scatter in the range pulse compression data, and/or reducing an amplitude of a scatter within a preset range comprising the strong scatter in the range pulse compression data;
determining target pulse compression data based on the amplitude suppression strategy of the strong scatter, wherein the target pulse compression data comprises an amplitude that is of the strong scatter in the range pulse compression data and that is obtained through suppression based on the amplitude suppression strategy of the strong scatter; and
sending the target pulse compression data.

12. The method according to claim 11, wherein the method further comprises:
determining, based on the position information of the strong scatter, a propagation distance of a radio frequency signal reflected by the strong scatter; and
determining a range cell of the strong scatter based on the propagation distance of the radio frequency signal and the range pulse compression data; and
the determining an amplitude suppression strategy of the strong scatter based on the second information and range pulse compression data comprises:
determining the amplitude suppression strategy of the strong scatter based on the second information and the range cell of the strong scatter, wherein the amplitude suppression strategy of the strong scatter comprises: reducing an amplitude of the range cell of the strong scatter, and/or reducing an amplitude within a preset range comprising the range cell of the strong scatter.

13. The method according to claim 11 or 12, wherein the amplitude of the range cell of the strong scatter is determined based on the intensity information of the strong scatter.

14. The method according to any one of claims 11 to 13, wherein the amplitude of the scatter within the preset range comprising the range cell of the strong scatter is determined based on the intensity information of the strong scatter.

15. An imaging method based on radio frequency signal transmission, wherein the method comprises:
sending second information, wherein the second information is determined based on information about a strong scatter in a to-be-imaged object, and the information about the strong scatter comprises position information and/or intensity information of the strong scatter;
receiving at least one piece of target pulse compression data, wherein the at least one piece of target pulse compression data is determined based on an amplitude suppression strategy of the strong scatter, the amplitude suppression strategy of the strong scatter comprises: reducing an amplitude of the strong scatter in range pulse compression data, and/or reducing an amplitude within a preset range comprising the strong scatter in the range pulse compression data, and the amplitude suppression strategy of the strong scatter is determined based on the second information; and
performing fusion imaging on the at least one piece of target pulse compression data.

16. The method according to claim 15, wherein when the second information comprises the amplitude suppression strategy of the strong scatter, before the sending second information, the method further comprises:
receiving a previous radio frequency signal;
determining, based on the previous radio frequency signal, the information about the strong scatter in the to-be-imaged object; and
determining the amplitude suppression strategy of the strong scatter based on the information about the strong scatter.

17. The method according to claim 15 or 16, wherein an amplitude of a range cell of the strong scatter is determined based on the intensity information of the strong scatter.

18. The method according to any one of claims 15 to 17, wherein when the information about the strong scatter comprises the intensity information of the strong scatter, an amplitude within a preset range comprising the range cell of the strong scatter is determined based on the intensity information of the strong scatter.

19. An imaging system based on radio frequency signal transmission, wherein the system comprises a first electronic device and a second electronic device, wherein
the first electronic device is configured to perform the method according to any one of claims 1 to 5, and the second electronic device is configured to perform the method according to any one of claims 6 to 10.

20. An imaging system based on radio frequency signal transmission, wherein the system comprises at least one third electronic device and a fourth electronic device, wherein
each third electronic device is configured to perform the method according to any one of claims 11 to 14, and the fourth electronic device is configured to perform the method according to any one of claims 15 to 18.

21. A communication apparatus, comprising a unit configured to perform each step of the method according to any one of claims 1 to 5, or a unit configured to perform each step of the method according to any one of claims 6 to 10, or a unit configured to perform each step of the method according to any one of claims 11 to 14, or a unit configured to perform each step of the method according to any one of claims 15 to 18.

22. A communication apparatus, wherein the apparatus comprises at least one processor, and the at least one processor is coupled to at least one memory; and
the at least one processor is configured to execute a computer program or instructions in the at least one memory, so that the communication apparatus performs the method according to any one of claims 1 to 5, or performs the method according to any one of claims 6 to 10, or performs the method according to any one of claims 11 to 14, or performs the method according to any one of claims 15 to 18.

23. A computer-readable storage medium, wherein the computer-readable storage medium stores a computer program or instructions; and when a computer reads and executes the computer program or the instructions, the computer is enabled to perform the method according to any one of claims 1 to 5, or perform the method according to any one of claims 6 to 10, or perform the method according to any one of claims 11 to 14, or perform the method according to any one of claims 15 to 18.

24. A chip, comprising a processor, configured to perform the method according to any one of claims 1 to 5, or perform the method according to any one of claims 6 to 10, or perform the method according to any one of claims 11 to 14, or perform the method according to any one of claims 15 to 18.
